(19) Europäisches Patentamt / European Patent Office / Office européen des brevets

(11) **EP 4 667 892 A1**

(12) **EUROPEAN PATENT APPLICATION**
published in accordance with Art. 153(4) EPC

(43) Date of publication:
**24.12.2025 Bulletin 2025/52**

(21) Application number: **24756931.2**

(22) Date of filing: **14.02.2024**

(51) International Patent Classification (IPC):
***G01M 11/02*** (2006.01)

(52) Cooperative Patent Classification (CPC):
**G01M 11/02**

(86) International application number:
**PCT/JP2024/005111**

(87) International publication number:
**WO 2024/172091 (22.08.2024 Gazette 2024/34)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **15.02.2023 JP 2023021827**

(71) Applicant: **Sumitomo Electric Industries, Ltd.
Osaka-shi, Osaka 541-0041 (JP)**

(72) Inventor: **HAYASHI, Tetsuya
Osaka-shi, Osaka 541-0041 (JP)**

(74) Representative: **TBK
Bavariaring 4-6
80336 München (DE)**

(54) **INTER-SPATIAL CHANNEL CROSSTALK MEASURING METHOD, INTER-CORE CROSSTALK MEASURING METHOD FOR MULTICORE OPTICAL FIBER, INTER-SPATIAL CHANNEL CROSSTALK MEASURING DEVICE, AND INTER-CORE CROSSTALK MEASURING DEVICE FOR MULTICORE OPTICAL FIBER**

(57)    This inter-spatial channel crosstalk measuring method involves measuring inter-spatial channel crosstalk in a space division multiplexed optical system which has a first input/output unit and a second input/output unit on the side opposite to the first input/output unit, and also has a first spatial channel and a second spatial channel. This method comprises: a first step for forming or providing a light reflecting surface at the second input/output unit; a second step for inputting testing light into the first spatial channel at the first input/output unit; a third step for causing at least partial light of the testing light to be reflected at the light reflecting surface; a fourth step for detecting first light power which is the power of light that is a portion of said partial light outputted from the first spatial channel at the first input/output unit and second light power which is the power of light that is a portion of said partial light outputted from the second spatial channel at the first input/output unit; and a fifth step for calculating the magnitude of crosstalk between the first spatial channel and the second spatial channel on the basis of the first light power and the second light power.

**Fig.16**

**Description**

TECHNICAL FIELD

The present disclosure relates to an inter-spatial-channel crosstalk measurement method, an inter-core crosstalk measurement method for a multi-core optical fiber, an inter-spatial-channel crosstalk measurement apparatus, and an inter-core crosstalk measurement apparatus for a multi-core optical fiber. This application claims priority from Japanese Patent Application No. 2023-021827 filed on February 15, 2023, and the entire contents of which are incorporated herein by reference.

BACKGROUND ART

Patent literature 1 and Non-patent literature 1 disclose an inter-core crosstalk measurement method for a multi-core optical fiber. In the methods described in Patent literature 1 and Non-patent literature 1, inter-core crosstalk is measured by causing a measurement beam to enter a certain core in one end of a multi-core optical fiber and detecting the power of the measurement beam output from each of the core and another core in the other end of the multi-core optical fiber.

Non-patent literature 2 discloses an inter-core crosstalk measurement method for a multi-core optical fiber using an optical time domain reflectometer (OTDR) measurement method. In the method described in Non-patent literature 2, inter-core crosstalk is measured by causing pulsed light to enter a certain core in one end of a multi-core optical fiber and detecting a temporal change in the power of backward Rayleigh scattering (Return light caused by Rayleigh scattering. The return light is the light in which a part of the incident light is returned in a direction opposite to the traveling direction of the incident light due to reflection, backscattering, or the like.) output from the core and another core in the one end of the multi-core optical fiber.

CITATION LIST

PATENT LITERATURE

Patent literature 1: WO 2012/115162

NON-PATENT LITERATURE

Non-patent literature 1: Tetsuya Hayashi et al., "Characterization of Crosstalk in Ultra-Low-Crosstalk Multi-Core Fiber", Journal of Lightwave Technology, Vol. 30, No. 4, (2012)
Non-patent literature 2: Masataka Nakazawa et al., "Nondestructive measurement of mode couplings along a multi-core fiber using a synchronous multi-channel OTDR", Optics Express, Vol. 20, No. 11, (2012)

SUMMARY OF INVENTION

An inter-core crosstalk measurement method for a multi-core optical fiber according to an aspect of the present disclosure is a method for measuring crosstalk between cores of the multi-core optical fiber, and the multi-core optical fiber has a first end portion and a second end portion opposite to the first end portion and has a first core and a second core. The measurement method includes a first step of forming or providing a light reflecting surface in the second end portion, a second step of causing test light to enter the first core in the first end portion, a third step of reflecting at least part of the test light on the light reflecting surface, a fourth step of detecting a first optical power and a second optical power, the first optical power being a power of light of the at least part of the test light and being a power of light emitted from the first core, the second optical power being a power of light of the at least part of the test light and being a power of light emitted from the second core, and a fifth step of calculating a magnitude of crosstalk between the first core and the second core, based on the first optical power and the second optical power.

BRIEF DESCRIPTION OF THE DRAWINGS

[FIG. 1] FIG. 1 is a diagram showing a configuration of a measurement apparatus according to an embodiment of the present disclosure.

[FIG. 2] FIG. 2 is a diagram showing a cross-section perpendicular to the central axis of a multi-core optical fiber.

[FIG. 3] FIG. 3 is a diagram showing a configuration of a three-port optical coupler (optical circulator).

[FIG. 4] FIG. 4 is a diagram showing a configuration of one modification of a measurement apparatus.

[FIG. 5] FIG. 5 is a diagram showing a configuration of another modification of a measurement apparatus.

[FIG. 6] FIG. 6 is a cross-sectional view showing an example of a light reflecting surface of a second end portion.

[FIG. 7] FIG. 7 is a cross-sectional view showing an example of a light reflecting surface of a second end portion.

[FIG. 8] FIG. 8 is a cross-sectional view showing an example of a light reflecting surface of a second end portion.

[FIG. 9] FIG. 9 is a cross-sectional view showing an example of a light reflecting surface of a second end portion.

[FIG. 10] FIG. 10 is a cross-sectional view showing an example of a light reflecting surface of a second end portion.

[FIG. 11] FIG. 11 is a cross-sectional view showing an example of a light reflecting surface of a second end portion.

[FIG. 12] FIG. 12 is a cross-sectional view showing an example of a light reflecting surface of a second end portion.

[FIG. 13] FIG. 13 is a graph schematically showing a time waveform of light power of continuous light.

[FIG. 14] FIG. 14 is a graph schematically showing a time waveform of light power of chopped light.

[FIG. 15] FIG. 15 is a graph schematically showing a time waveform of light power of pulsed light.

[FIG. 16] FIG. 16 is a flowchart showing an inter-core crosstalk measurement method according to an embodiment.

[FIG. 17] FIG. 17 is a flowchart showing a modification of an inter-core crosstalk measurement method.

[FIG. 18] FIG. 18 is a flowchart showing another modification of an inter-core crosstalk measurement method.

[FIG. 19] FIG. 19 is a flowchart showing still another modification of an inter-core crosstalk measurement method.

[FIG. 20] FIG. 20 is a graph showing relationships between measurement error of inter-core crosstalk caused by backward Rayleigh scattering and transmission loss when the angle $\theta$ is changed from 0 to 6 in increments of 1 degree.

[FIG. 21] FIG. 21 is a graph showing a relationship between the maximum allowable transmission loss and the angle of the entrance/exit surface of a multi-core optical fiber when an allowable measurement error is 2 dB, 1 dB, 0.5 dB, 0.2 dB, or 0.1 dB.

[FIG. 22] FIG. 22 is a graph schematically showing time waveforms of power of light emitted from a first core into which test light enters and power of light emitted from a second core, when the test light is pulsed light.

[FIG. 23] FIG. 23 is a diagram showing an appearance of a holding unit included in a measurement apparatus according to a first modification. Part (a) is a plan view of the holding unit. Part (b) is a side view of the holding unit. Part (c) is a front view of the holding unit.

[FIG. 24] FIG. 24 is a diagram showing an appearance of a holding unit capable of holding a tape core wire including a plurality of MCFs. Part (a) is a plan view of the holding unit. Part (b) is a side view of the holding unit. Part (c) is a front view of the holding unit.

[FIG. 25] FIG. 25 is a diagram schematically showing a cross-section of a dustproof cover for accommodating a holding unit.

[FIG. 26] FIG. 26 is a diagram showing a state in which a lid portion of a dustproof cover is opened.

[FIG. 27] FIG. 27 is a diagram schematically showing the configuration of a measurement apparatus according to a reference example.

DETAILED DESCRIPTION

[Problems to be Solved by Present Disclosure]

In the conventional crosstalk measurement of a multi-core optical fiber, as described in Patent literature 1 or Non-patent literature 1, measurement beam is caused to enter a certain core in one end of the multi-core optical fiber, and the power of the measurement beam output from the core and another core is detected in the other end of the multi-core optical fiber. However, there are cases where it is not easy to connect a light source that outputs measurement beam to one end of the multi-core optical fiber and connect a photodetector to the other end of the multi-core optical fiber.

In contrast, as described in Non-patent literature 2, by using an OTDR measurement method that uses backward Rayleigh scattering light, it is possible to input and output measurement beam only at one end of a multi-core optical fiber. However, since the power of the backward Rayleigh scattering light is very small, when the crosstalk is small, the detection signal of the backward Rayleigh scattering light is buried in noise, and there is a problem that the crosstalk cannot be measured.

An object of the present disclosure is to provide an inter-spatial-channel crosstalk measurement method, an inter-core crosstalk measurement method for a multi-core optical fiber, an inter-spatial-channel crosstalk measurement apparatus, and an inter-core crosstalk measurement apparatus for a multi-core optical fiber, which are capable of measuring a magnitude of crosstalk even when the crosstalk is small, while connecting a light source that outputs test light and a photodetector to one end of the multi-core optical fiber.

[Advantageous Effects of Present Disclosure]

According to the present disclosure, it is possible to provide an inter-spatial-channel crosstalk measurement method, an inter-core crosstalk measurement method for a multi-core optical fiber, an inter-spatial-channel crosstalk measurement apparatus, and an inter-core crosstalk measurement apparatus for a multi-core optical fiber, which are capable of measuring a magnitude of crosstalk even when the crosstalk is small, while connecting a light source that outputs test light and a photodetector to one end of the multi-core optical fiber.

[Description of Embodiments of Present Disclosure]

First, the contents of embodiments of the present disclosure will be listed and explained.

[1] An inter-spatial-channel crosstalk measurement method according to an aspect of the present disclosure is a method for measuring crosstalk between spatial channels of a space division multiplexing optical system having a first entrance/exit portion and a second entrance/exit portion opposite to the first entrance/exit portion and having a first spatial channel and a second spatial channel. The measurement method includes a first step, a second step, a third step, a fourth step, and a fifth step. In the first step, a light reflecting surface is formed or provided in the second entrance/exit portion. In the second step, test light is caused to enter the first spatial channel in the first entrance/exit portion. In the third step, at least part of the test light is reflected on the light reflecting surface. In the fourth step, a first optical power and a second optical power are detected, the first optical power is a power of light of the at least part of the test light and is a power of light emitted from the first spatial channel in the first entrance/exit portion, and the second optical power is a power of light of the at least part of the test light and is a power of light emitted from the second spatial channel in the first entrance/exit portion. In the fifth step, a magnitude of crosstalk between the first spatial channel and the second spatial channel is calculated, based on the first optical power and the second optical power.

In the measurement method according to the above [1], it is sufficient to connect the light source that outputs the test light and the photodetector to the first entrance/exit portion of the space division multiplexing optical system, and it is not necessary to connect any of them to the second entrance/exit portion. Thus, even when it is not easy to access both the entrance/exit portions of the space division multiplexing optical system at the same time, the light source and the light detector can be easily connected. Furthermore, by reducing the number of connections in measurement by half, crosstalk measurement of the space division multiplexing optical system can be efficiently performed. In addition, in the measurement method according to the above [1], the magnitude of crosstalk is calculated based on the power of light reflected on the light reflecting surface provided (or formed) in the second entrance/exit portion. The power of light reflected on the light reflecting surface is much larger than the power of backward Rayleigh scattering light in the optical device in the OTDR measurement. Thus, even when the crosstalk is small, the detection signal is not buried in noise, and the crosstalk can be suitably measured.

[2] In the measurement method according to the above [1], the first optical power may be a total sum of optical power components emitted from the first spatial channel among return optical power components of the test light including backscattered light at each position in a longitudinal direction of the space division multiplexing optical system. Further, the second optical power may be a total sum of optical power components emitted from the second spatial channel among the return optical power components of the test light including backscattered light at each position in the longitudinal direction of the space division multiplexing optical system.

[3] In the measurement method according to the above [2], the space division multiplexing optical system may be a space division multiplexing optical fiber, and the light reflecting surface may be an end surface of the space division multiplexing optical fiber. When a wavelength of the test light is denoted by $\lambda$ ($\mu$m), a ratio of a circumference of a circle to a diameter of the circle is denoted by $\pi$, a refractive index of the first spatial channel and the second spatial channel of the space division multiplexing optical fiber is denoted by n, a transmission loss coefficient of the first spatial channel and the second spatial channel is denoted by $\alpha$ (km$^{-1}$), 0.5 times a mode field diameter of the first spatial channel and the second spatial channel is denoted by w ($\mu$m), an angle formed between each of planes tangent to centers of the first spatial channel and the second spatial channel on the end surface and a plane orthogonal to a central axis of the space division multiplexing optical fiber is denoted by $\varphi$ (rad), a length of the space division multiplexing optical fiber is denoted by L (km), an effective cross-sectional area of the first spatial channel and the second spatial channel is denoted by $A_{eff}$ ($\mu$m$^2$), and a Rayleigh scattering loss coefficient of the first spatial channel and the second spatial channel is denoted by $\alpha_R$ (km$^{-1}$), a value of Expression (A) may be $10^{0.2}$ or less. Further, when the first optical power is denoted by PW 1, the second optical power is denoted by PW2, and the magnitude of the crosstalk between the first spatial channel and the second spatial channel is denoted by XT, XT may be calculated using Formula (B).
[Math. 1]

$$2\frac{\left(\dfrac{n-1}{n+1}\right)^2\exp\left[-\left(\dfrac{2\pi nw\phi}{\lambda}\right)^2\right]+\dfrac{3\lambda^3}{8\pi n^2 A_{\text{eff}}}\dfrac{\alpha_R}{\alpha}\left[\dfrac{\exp(2\alpha L)-1}{2}\right]}{2\left(\dfrac{n-1}{n+1}\right)^2\exp\left[-\left(\dfrac{2\pi nw\phi}{\lambda}\right)^2\right]+\dfrac{3\lambda^3}{8\pi n^2 A_{\text{eff}}}\dfrac{\alpha_R}{\alpha}\left[\dfrac{\exp(2\alpha L)-1}{2\alpha L}-1\right]}\quad\cdots\ (\text{A})$$

[Math. 2]

$$XT=\frac{1}{2}\frac{PW2}{PW1}\qquad\cdots\ (\text{B})$$

This makes it possible to reduce crosstalk measurement errors caused by backward Rayleigh scattering light to 10 dB or less. Alternatively, when crosstalk is evaluated using Formula (1) described later, crosstalk measurement errors caused by backward Rayleigh scattering light can be reduced to 2 dB or less. Thus, the crosstalk can be measured with higher accuracy.

[4] In the measurement method according to the above [2], the space division multiplexing optical system may be a space division multiplexing optical fiber, and the light reflecting surface may be an end surface of the space division multiplexing optical fiber. When an angle formed between each of planes tangent to centers of the first spatial channel and the second spatial channel on the end surface and a plane orthogonal to a central axis of the space division multiplexing optical fiber is denoted by $\theta$ (degree), a loss coefficient of the first spatial channel and the second spatial channel is denoted by $\alpha_{\text{dB}}$ (dB·km$^{-1}$), and a length of the space division multiplexing optical fiber is denoted by L (km), the angle $\theta$ and a transmission loss $\alpha_{\text{dB}}L$ may satisfy Formula (C).

[Math. 3]

$$\alpha_{\text{dB}}L \leq a_0 + a_1\theta + a_2\theta^2 \ \dots\ (\text{C})$$

$a_0 = -3.40 \times 10^{-1}$ [dB], $a_1 = -3.73 \times 10^{-2}$ [dB/degree], $a_2 = 7.46 \times 10^0$ [dB/degree$^2$] Further, the test light may have a wavelength of 1.625 $\mu$m or less, and, at the wavelength, the first spatial channel and the second spatial channel may have an effective cross-sectional area of 60 $\mu$m$^2$ or more. Further, when the first optical power is denoted by PW1, the second optical power is denoted by PW2, and the magnitude of the crosstalk between the first spatial channel and the second spatial channel is denoted by XT, XT may be calculated using Formula (D).

[Math. 4]

$$XT=\frac{1}{2}\frac{PW2}{PW1}\qquad\cdots\ (\text{D})$$

This makes it possible to reduce the crosstalk measurement errors caused by backward Rayleigh scattering light to 10 dB or less, and to measure crosstalk with higher accuracy.

[5] In the measurement method according to the above [2], the space division multiplexing optical system may be a space division multiplexing optical fiber, and the light reflecting surface may be an end surface of the space division multiplexing optical fiber. When a wavelength of the test light is denoted by $\lambda$ ($\mu$m), a ratio of a circumference of a circle to a diameter of the circle is denoted by $\pi$, a refractive index of the first spatial channel and the second spatial channel of the space division multiplexing optical fiber is denoted by n, a transmission loss coefficient of the first spatial channel and the second spatial channel is denoted by $\alpha$ (km$^{-1}$), 0.5 times a mode field diameter of the first spatial channel and the second spatial channel is denoted by w ($\mu$m), an angle formed between each of planes tangent to centers of the first spatial channel and the second spatial channel on the end surface and a plane orthogonal to a central axis of the space division multiplexing optical fiber is denoted by $\varphi$ (rad), a length of the space division multiplexing optical fiber is denoted by L (km), an effective cross-sectional area of the first spatial channel and the second spatial channel is denoted by $A_{\text{eff}}$ ($\mu$m$^2$), a Rayleigh scattering loss coefficient of the first spatial channel and the second spatial channel is denoted by $\alpha_R$ (km$^{-1}$), the first optical power is denoted by PW10, the second optical power is denoted by PW20, and the magnitude of the crosstalk between the first spatial channel and the second spatial channel is denoted by XT, XT may be calculated using Formula (E).

[Math. 5]

$$XT = \left(\frac{PW20}{PW10}\right) \frac{\left(\frac{n-1}{n+1}\right)^2 \exp\left[-\left(\frac{2\pi n w \phi}{\lambda}\right)^2\right] + \frac{3\lambda^3}{8\pi n^2 A_{\text{eff}}} \frac{\alpha_R}{\alpha} \left[\frac{\exp(2\alpha L) - 1}{2}\right]}{2\left(\frac{n-1}{n+1}\right)^2 \exp\left[-\left(\frac{2\pi n w \phi}{\lambda}\right)^2\right] + \frac{3\lambda^3}{8\pi n^2 A_{\text{eff}}} \frac{\alpha_R}{\alpha} \left[\frac{\exp(2\alpha L) - 1}{2\alpha L} - 1\right]} \quad \cdots (E)$$

[6] In the measurement method according to the above [2], the space division multiplexing optical system may be a space division multiplexing optical fiber, the light reflecting surface may be an end surface of the space division multiplexing optical fiber, and when a wavelength of the test light is denoted by $\lambda$ ($\mu$m), a ratio of a circumference of a circle to a diameter of the circle is denoted by $\pi$, a refractive index of the first spatial channel and the second spatial channel of the space division multiplexing optical fiber is denoted by n, a transmission loss coefficient of the first spatial channel and the second spatial channel is denoted by $\alpha$ (km$^{-1}$), a length of the space division multiplexing optical fiber is denoted by L (km), an effective cross-sectional area of the first spatial channel and the second spatial channel is denoted by $A_{\text{eff}}$ ($\mu$m$^2$), a Rayleigh scattering loss coefficient of the first spatial channel and the second spatial channel is denoted by $\alpha_R$ (km$^{-1}$), the first optical power is denoted by PW10, and the second optical power is denoted by PW20, XT may be calculated using Formula (F).
[Math. 6]

$$XT = \left(\frac{PW20}{PW10}\right) \frac{\left(\frac{n-1}{n+1}\right)^2 + \frac{3\lambda^3}{8\pi n^2 A_{\text{eff}}} \frac{\alpha_R}{\alpha} \left[\frac{\exp(2\alpha L) - 1}{2}\right]}{2\left(\frac{n-1}{n+1}\right)^2 + \frac{3\lambda^3}{8\pi n^2 A_{\text{eff}}} \frac{\alpha_R}{\alpha} \left[\frac{\exp(2\alpha L) - 1}{2\alpha L} - 1\right]} \quad \cdots (F)$$

[7] In the measurement method according to the above [1], in the fourth step, a time-intensity waveform of light of the test light entering the first spatial channel in the first entrance/exit portion, the light being emitted from the first spatial channel in the first entrance/exit portion after being reflected in the first spatial channel, in the second spatial channel, and on the light reflecting surface, may be analyzed to obtain, as the first optical power, a power of light reflected at a longitudinal direction position corresponding to the light reflecting surface and emitted from the first spatial channel. Further, in the fourth step, a time-intensity waveform of light of the test light entering the first spatial channel in the first entrance/exit portion, the light being emitted from the second spatial channel in the first entrance/exit portion after being reflected in the first spatial channel, in the second spatial channel, and on the light reflecting surface, may be analyzed to obtain, as the second optical power, a power of light reflected at the longitudinal direction position corresponding to the light reflecting surface and emitted from the second spatial channel.
[8] In the measurement method according to any one of the above [1] to [7], the test light may be pulsed light. Further, the first optical power and the second optical power may be a power of light emitted from the first spatial channel and a power of light emitted from the second spatial channel, respectively, at a timing when a delay time corresponding to twice a distance between the first entrance/exit portion and the reflecting surface elapses after the test light enters the first spatial channel in the second step. This makes it possible to eliminate the influence of backward Rayleigh scattering light from the first optical power and the second optical power, and to measure crosstalk with higher accuracy.
[9] In the measurement method according to the above [7] or [8], the space division multiplexing optical system may be a space division multiplexing optical fiber and the light reflecting surface may be an end surface of the space division multiplexing optical fiber. When a wavelength of the test light is denoted by $\lambda$ ($\mu$m), a ratio of a circumference of a circle to a diameter of the circle is denoted by $\pi$, a refractive index of the first spatial channel and the second spatial channel of the space division multiplexing optical fiber is denoted by n, 0.5 times a mode field diameter of the first spatial channel and the second spatial channel is denoted by w ($\mu$m), an angle formed between each of planes tangent to centers of the first spatial channel and the second spatial channel on the end surface and a plane orthogonal to a central axis of the space division multiplexing optical fiber is denoted by $\varphi$ (rad), an effective cross-sectional area of the first spatial channel and the second spatial channel is denoted by $A_{\text{eff}}$ ($\mu$m$^2$), a Rayleigh scattering loss coefficient of the first spatial channel and the second spatial channel is denoted by $\alpha_R$ (km$^{-1}$), and a pulse width of the test light propagating through the first spatial channel and the second spatial channel in the space division multiplexing optical fiber is denoted by T (km), a value defined by Formula (G) may be 10 or more.
[Math. 7]

$$G = \frac{\left(\dfrac{n-1}{n+1}\right)^2 \exp\left[-\left(\dfrac{2\pi n w \phi}{\lambda}\right)^2\right]}{\dfrac{3\lambda^2}{8\pi n^2 A_{\text{eff}}} \alpha_R T} \qquad \cdots \quad (G)$$

This makes it possible to set the ratio (A1/A2, the gain of signal light due to reflection) of the power (first optical power and second optical power) A1 of the pulsed light reflected on the light reflecting surface to the power A2 of the pulsed light of backward Rayleigh scattering light generated immediately before the reflection and not including reflected light to 10 dB or more. Thus, the crosstalk can be measured with higher accuracy.

[10] In the measurement method according to any one of the above [1] to [9], the space division multiplexing optical system may be a space division multiplexing optical fiber or a space division multiplexing optical device, the light reflecting surface may be an entrance/exit surface of the space division multiplexing optical fiber or the space division multiplexing optical device, and the first step may include forming the entrance/exit surface by splitting or cleaving the entrance/exit portion of the space division multiplexing optical fiber or the space division multiplexing optical device. This makes it possible to easily form the light reflecting surface of the second entrance/exit portion.

[11] In the measurement method according to any one of the above [1] to [10], the light reflecting surface may be an entrance/exit surface of the space division multiplexing optical system. The first step may include providing a reflective film on the entrance/exit surface or immersing the entrance/exit surface in a liquid metal. Thus, the reflectance at the light reflecting surface is increased, the first optical power and the second optical power are further increased, so that the crosstalk can be measured with higher accuracy.

[12] In the measurement method according to any one of the above [1] to [11], the light reflecting surface may be an entrance/exit surface of the space division multiplexing optical system. The first step may include arranging the entrance/exit surface such that the entrance/exit surface comes into contact only with a gas. Thus, the reflectance at the light reflecting surface is increased, the first optical power and the second optical power are further increased, so that the crosstalk can be measured with higher accuracy.

[13] In the measurement method according to the above [1], the first step may include connecting a second entrance/exit surface of a second space division multiplexing optical system different from the space division multiplexing optical system to an entrance/exit surface of the space division multiplexing optical system in the second entrance/exit portion, and the second space division multiplexing optical system has a first entrance/exit surface on which a reflective film serving as the light reflecting surface is provided. Thus, the reflectance at the light reflecting surface is increased, the first optical power and the second optical power are further increased, so that the crosstalk can be measured with higher accuracy.

[14] In the measurement method according to the above [1], the first step may include optically coupling a second entrance/exit surface of each of a first single-core optical fiber and a second single-core optical fiber to a corresponding one of the first spatial channel and the second spatial channel in the second entrance/exit portion, and each of the first single-core optical fiber and the second single-core optical fiber has a first entrance/exit surface on which a reflective film serving as the light reflecting surface is provided. Thus, the reflectance at the light reflecting surface is increased, the first optical power and the second optical power are further increased, so that the crosstalk can be measured with higher accuracy.

[15] In the measurement method according to any one of the above [3] to [6], [9], and [10], the space division multiplexing optical fiber may be a multi-core optical fiber or a multi-mode optical fiber.

[16] In the measurement method according to the above [1] or [2], the space division multiplexing optical system may be a multi-core optical device, a multi-core optical system, a multi-mode optical device, or a multi-mode optical system.

[17] In the measurement method according to any one of the above [1] to [16], the first spatial channel and the second spatial channel may be a first core and a second core, respectively, or may be a first mode and a second mode, respectively.

[18] An inter-core crosstalk measurement method for a multi-core optical fiber according to an aspect of the present disclosure is a method for measuring crosstalk between cores of the multi-core optical fiber, the multi-core optical fiber has a first end portion and a second end portion opposite to the first end portion and has a first core and a second core. The measurement method includes a first step, a second step, a third step, a fourth step, and a fifth step. In the first step, a light reflecting surface is formed or provided in the second end portion. In the second step, test light is caused to enter the first core in the first end portion. In the third step, at least part of the test light is reflected on the light reflecting surface. In the fourth step, a first optical power and a second optical power are detected, the first optical power is a power of light of the at least part of the test light and is a power of light emitted from the first core in the first end portion, and the second optical power is a power of light of the at least part of the test light and is a power of light emitted from the second core in the first end portion. In the fifth step, a magnitude of crosstalk between the first core and the second core is calculated, based on the first optical power and the second optical power.

In the measurement method according to the above [18], it is sufficient to connect the light source that outputs the test light and the photodetector to the first end portion of the multi-core optical fiber, and it is not necessary to connect any of them to the second end portion. Thus, even when it is not easy to access both ends of the multi-core optical fiber at the same time, the light source and the photodetector can be easily connected. Furthermore, by reducing the number of connections in measurement by half, crosstalk measurement of the multi-core optical fiber can be efficiently performed. In addition, in the measurement method according to the above [18], the magnitude of crosstalk is calculated based on the power of light reflected on the light reflecting surface provided (or formed) in the second end portion. The power of the light reflected on the light reflecting surface is much larger than the power of the backward Rayleigh scattering light in the optical fiber in the OTDR measurement. Thus, even when the crosstalk is small, the detection signal is not buried in noise, and the crosstalk can be suitably measured.

[19] In the measurement method according to the above [18], the light reflecting surface may be an end surface of the multi-core optical fiber. The first step may include forming a substantially flat end surface by cleaving at or near the second end portion of the multi-core optical fiber by applying a tensile stress or a bending stress along a fiber longitudinal axis direction after making a minute flaw in an optical fiber outer circumference, and making the substantially flat end surface as the light reflecting surface. This makes it possible to easily form the light reflecting surface of the second end portion. The cleaving may be performed by a method different from the above as long as a flat end surface can be formed on the cut surface of the optical fiber, and for example, laser cleaving may be used. When the laser cleaving is used, a more uniform end surface can be formed, and the reflectance can be made more uniform among a plurality of cores. Alternatively, when the second end portion is mounted on a ferrule, a capillary, a V groove, or the like, the light reflecting surface may be formed by polishing. A more uniform end surface can be formed, and the reflectance can be made more uniform among the plurality of cores.

[20] In the measurement method according to the above [18] or [19], the light reflecting surface may be an end surface of the multi-core optical fiber. The first step may include providing a reflective film on the end surface or immersing the end surface in a liquid metal. Thus, the reflectance at the light reflecting surface is increased, the first optical power and the second optical power are further increased, so that the crosstalk can be measured with higher accuracy.

[21] In the measurement method according to the above [18] or [19], the light reflecting surface may be an end surface of the multi-core optical fiber. The first step may include arranging the end surface such that the end surface comes into contact only with a gas. Thus, the reflectance at the light reflecting surface is increased, the first optical power and the second optical power are further increased, so that the crosstalk can be measured with higher accuracy.

[22] In the measurement method according to the above [18] to [21], the test light may be pulsed light. The first optical power and the second optical power may be a power of light emitted from the first core and a power of light emitted from the second core, respectively, at a timing when a delay time corresponding to twice an optical distance between the first end portion and the reflecting surface elapses after the test light enters the first core in the second step. This makes it possible to eliminate the influence of backward Rayleigh scattering light from the first optical power and the second optical power, and to measure crosstalk with higher accuracy.

[23] In the measurement method according to the above [22], the light reflecting surface may be an end surface of the multi-core optical fiber. When a wavelength of the test light is denoted by $\lambda$ ($\mu$m), a ratio of a circumference of a circle to a diameter of the circle is denoted by $\pi$, a refractive index of the cores of the multi-core optical fiber is denoted by n, 0.5 times a mode field diameter of the first core and the second core is denoted by w ($\mu$m), an angle formed between a plane tangent to the end surface at centers of the first core and the second core and a plane orthogonal to a central axis of the multi-core optical fiber is denoted by $\varphi$ (rad), an effective cross-sectional area of the first core and the second core is denoted by $A_{eff}$ ($\mu$m$^2$), a Rayleigh scattering loss coefficient of the first core and the second core is denoted by $\alpha_R$ (km$^{-1}$), and a pulse width of the test light propagating through the cores in the multi-core optical fiber is denoted by T (km), a value defined by Formula (H) may be 10 or more.

[Math. 8]

$$G = \frac{\left(\dfrac{n-1}{n+1}\right)^2 \exp\left[-\left(\dfrac{2\pi n w \phi}{\lambda}\right)^2\right]}{\dfrac{3\lambda^2}{8\pi n^2 A_{eff}}\alpha_R T} \qquad \cdot\cdot\cdot \ (\text{H})$$

This makes it possible to set the ratio (A1/A2, the gain of signal light due to reflection) of the power (first optical power and second optical power) A1 of the pulsed light reflected on the light reflecting surface to the power A2 of the pulsed light of backward Rayleigh scattering light generated immediately before the reflection and not including reflected light to 10 dB or more. Thus, the crosstalk can be measured with higher accuracy.

[24] In the measurement method according to the above [18], the first step may include connecting a second end surface of a second multi-core optical fiber different from the multi-core optical fiber to an end surface of the multi-core optical fiber in the second end portion, and the second multi-core optical fiber has a first end surface on which a reflective film serving as the light reflecting surface is provided. Thus, the reflectance at the light reflecting surface is increased, the first optical power and the second optical power are further increased, so that the crosstalk can be measured with higher accuracy.

[25] In the measurement method according to the above [18], the first step may include optically coupling a second end surface of each of a first single-core optical fiber and a second single-core optical fiber to a corresponding one of the first core and the second core in the second end portion, and each of the first single-core optical fiber and the second single-core optical fiber has a first end surface on which a reflective film serving as the light reflecting surface is provided. Thus, the reflectance at the light reflecting surface is increased, the first optical power and the second optical power are further increased, so that the crosstalk can be measured with higher accuracy.

[26] An inter-spatial-channel crosstalk measurement apparatus according to an aspect of the present disclosure is an apparatus for measuring crosstalk between spatial channels of a space division multiplexing optical system having a first entrance/exit portion and a second entrance/exit portion opposite to the first entrance/exit portion and having N spatial channels (with N being an integer of 2 or more). The measurement apparatus includes a light source unit, an optical detection unit, and a calculation unit. The light source unit is configured to cause test light to enter each of the N spatial channels in the first entrance/exit portion. The optical detection unit detects a first optical power and a second optical power. The first optical power is a power of light of at least part of the test light reflected on a light reflecting surface formed or provided in the second entrance/exit portion, and is a power of light emitted from a first spatial channel that the test light enters. The second optical power is a power of light emitted from a second spatial channel different from the first spatial channel. A calculation unit is configured to calculate a magnitude of crosstalk between the first spatial channel and the second spatial channel, based on the first optical power and the second optical power. In the measurement apparatus according to the above [26], it is sufficient to connect the light source unit and the optical detection unit to the first entrance/exit portion of the space division multiplexing optical system, and it is not necessary to connect any of them to the second entrance/exit portion. Thus, even when it is not easy to access both entrance/exit portions of the space division multiplexing optical system at the same time, the light source and the light detector can be easily connected. Furthermore, by reducing the number of connections in measurement by half, crosstalk measurement of the space division multiplexing optical system can be efficiently performed. In addition, in the measurement apparatus according to the above [26], the magnitude of crosstalk is calculated based on the power of light reflected on the light reflecting surface provided (or formed) in the second end portion. The power of the light reflected on the light reflecting surface is much larger than the power of the backward Rayleigh scattering light in the OTDR measurement. Thus, even when the crosstalk is small, the detection signal is not buried in noise, and the crosstalk can be suitably measured.

[27] The inter-spatial-channel crosstalk measurement apparatus according to the above [26] may further include N three-port optical couplers and an optical component. The N three-port optical couplers each has a first port, a second port, and a third port, wherein light input to the first port is output from the second port, and light input to the second port is output from the third port. The optical component is configured to optically couple each of the N spatial channels in the first entrance/exit portion of the space division multiplexing optical system to the second port of a corresponding one of the N three-port optical couplers. The light source unit is optically coupled to the first ports of the N three-port optical couplers. The optical detection unit is optically coupled to the third ports of the N three-port optical couplers. This can simplify a configuration in which the test light from the light source unit enters each of the N cores and the light emitted from the first core and the light emitted from the second core are detected by the optical detection unit.

[28] In the inter-spatial-channel crosstalk measurement apparatus according to the above [27], the light source unit may include N light sources, and each of the N light sources may be optically coupled to the first port of a corresponding one of the N three-port optical couplers. Thus, the test light can be input to the first port of each of the N three-port optical couplers with a simple configuration.

[29] In the inter-spatial-channel crosstalk measurement apparatus according to the above [27], the light source unit may include a single light source, and a first optical switch. The first optical switch is configured to selectively optically couple the single light source to the first port of one of the N three-port optical couplers. This makes it possible to reduce the number of light sources.

[30] In the inter-spatial-channel crosstalk measurement apparatuses according to any one of the above [27] to [29], the optical detection unit may include N light receivers. Each of the N light receivers may be optically coupled to the third port of a corresponding one of the N three-port optical couplers. Thus, light output from the third port of each of the N three-port optical couplers can be detected with a simple configuration.

[31] In the inter-spatial-channel crosstalk measurement apparatuses according to any one of the above [27] to [29], the optical detection unit may include a single light receiver, and a second optical switch. The second optical switch is configured to selectively optically couple the single light receiver to the third port of one of the N three-port optical couplers. This makes it possible to reduce the number of light receivers.

[32] In the inter-spatial-channel crosstalk measurement apparatus according to any one of the above [26] to [31], the first optical power may be a power of light reflected at a longitudinal direction position corresponding to the light reflecting surface and emitted from the first spatial channel, the first optical power being obtained by analyzing a time-intensity waveform of light of the test light entering the first spatial channel in the first entrance/exit portion, the light being emitted from the first spatial channel in the first entrance/exit portion after being reflected in the first spatial channel, in the second spatial channel, and on the light reflecting surface. The second optical power may be a power of light reflected at the longitudinal direction position corresponding to the light reflecting surface and emitted from the second spatial channel, the second optical power being obtained by analyzing a time-intensity waveform of light of the test light entering the first spatial channel in the first entrance/exit portion, the light being emitted from the second spatial channel in the first entrance/exit portion after being reflected in the first spatial channel, in the second spatial channel, and on the light reflecting surface.

[33] In the inter-spatial-channel crosstalk measurement apparatus according to any one of the above [26] to [31], the test light may be pulsed light. The first optical power and the second optical power may be a power of light emitted from the first spatial channel and a power of light emitted from the second spatial channel, respectively, at a timing when a delay time corresponding to twice a distance between the first entrance/exit portion and the reflecting surface elapses after the test light enters the first spatial channel. This makes it possible to eliminate the influence of backward Rayleigh scattering light from the first optical power and the second optical power, and to measure crosstalk with higher accuracy.

[34] In the inter-spatial-channel crosstalk measurement apparatus according to any one of the above [26] to [33], the light reflecting surface may be an entrance/exit surface of the space division multiplexing optical system. The inter-spatial-channel crosstalk measurement apparatus may further include a holding unit configured to hold the space division multiplexing optical system such that the entrance/exit surface is in contact only with a gas.

[35] The inter-spatial-channel crosstalk measurement apparatus according to any one of the above [26] to [33] may further include a second space division multiplexing optical system having a first entrance/exit surface on which a reflective film serving as the light reflecting surface is provided. The second space division multiplexing optical system may have a second entrance/exit surface connected to an entrance/exit surface of the space division multiplexing optical system in the second entrance/exit portion. Thus, the reflectance at the light reflecting surface is increased, the first optical power and the second optical power are further increased, so that the crosstalk can be measured with higher accuracy.

[36] The inter-spatial-channel crosstalk measurement apparatus according to any one of the above [26] to [33] may further include N single-spatial-channel optical fibers each having a first entrance/exit surface on which a reflective film serving as the light reflecting surface is provided. Each of the N single-spatial-channel optical fibers may have a second entrance/exit surface optically coupled to a corresponding one of the N spatial channels in the second entrance/exit portion. Thus, the reflectance at the light reflecting surface is increased, the first optical power and the second optical power are further increased, so that the crosstalk can be measured with higher accuracy.

[37] In the inter-spatial-channel crosstalk measurement apparatus according to any one of the above [26] to [36], the space division multiplexing optical system may be a space division multiplexing optical fiber.

[38] In the inter-spatial-channel crosstalk measurement apparatus according to the above [37], the space division multiplexing optical fiber may be a multi-core optical fiber or a multi-mode optical fiber.

[39] In the inter-spatial-channel crosstalk measurement apparatus according to any one of the above [26] to [36], the space division multiplexing optical system may be a multi-core optical device, a multi-core optical fiber, a multi-mode optical device, a multi-mode optical fiber, or an optical coupling of two or more thereof.

[40] In the inter-spatial-channel crosstalk measurement apparatus according to any one of the above [26] to [36], the first spatial channel and the second spatial channel may be a first core and a second core, respectively, or may be a first mode and a second mode, respectively.

[41] An inter-core crosstalk measurement apparatus for a multi-core optical fiber according to an aspect of the present disclosure is an apparatus for measuring crosstalk between cores of the multi-core optical fiber having a first end portion and a second end portion opposite to the first end portion and having N cores (with N being an integer of 2 or more). The apparatus includes a light source unit, an optical detection unit, and a calculation unit. The light source unit is configured to cause test light to enter each of the N cores in the first end portion. The optical detection unit is configured to detect; a first optical power which is a power of light of at least part of the test light and is a power of light emitted from a first core that the test light enters; and a second optical power which is a power of light of the at least part of the test light and is a power of light emitted from a second core different from the first core, and the at least part of the test light is a light reflected on a light reflecting surface formed or provided in the second end portion. The calculation unit is configured to calculate a magnitude of crosstalk between the first core and the second core, based on the first optical power and the second optical power.

In the measurement apparatus according to the above [41], it is sufficient to connect the light source unit and the optical detection unit to the first end portion of the multi-core optical fiber, and it is not necessary to connect any of them to the second end portion. Thus, even when it is not easy to access both ends of the multi-core optical fiber at the same time, the light source and the photodetector can be easily connected. Furthermore, by reducing the number of connections in measurement by half, crosstalk measurement of a multi-core optical fiber can be efficiently performed. In addition, in the measurement apparatus according to the above [41], the magnitude of crosstalk is calculated based on the power of light reflected on the light reflecting surface provided (or formed) in the second end portion. The power of the light reflected on the light reflecting surface is much larger than the power of the backward Rayleigh scattering light in the OTDR measurement. Thus, even when the crosstalk is small, the detection signal is not buried in noise, and the crosstalk can be suitably measured.

[42] The measurement apparatus according to the above [41] may further include N optical circulators and an optical component. The N optical circulators each has a first port, a second port, and a third port, wherein light input to the first port is output from the second port, and light input to the second port is output from the third port. The optical component is configured to optically couple each of the N cores in the first end portion of the multi-core optical fiber to the second port of a corresponding one of the N optical circulators. The light source unit is optically coupled to the first ports of the N optical circulators. The optical detection unit is optically coupled to the third ports of the N optical circulators. This can simplify a configuration in which the test light from the light source unit enters each of the N cores and the light emitted from the first core and the light emitted from the second core are detected by the optical detection unit.

[43] In the measurement apparatus according to the above [42], the light source unit may include N light sources, and each of the N light sources may be optically coupled to the first port of a corresponding one of the N optical circulators. Thus, the test light can be input to the first port of a corresponding one of the N optical circulators with a simple configuration.

[44] In the measurement apparatus according to the above [42], the light source unit may include a single light source, and a first optical switch. The first optical switch is configured to selectively optically couple the single light source to the first port of one of the N optical circulators. This makes it possible to reduce the number of light sources.

[45] In the measurement apparatus according to any one of the above [42] to [44], the optical detection unit may include N light receivers. Each of the N light receivers may be optically coupled to the third port of a corresponding one of the N optical circulators. Thus, the light output from the third port of each of the N optical circulators can be detected with a simple configuration.

[46] In the measurement apparatus according to the above [43] or [44], the optical detection unit may include a single light receiver, and a second optical switch. The second optical switch is configured to selectively optically couple the single light receiver to the third port of one of the N optical circulators. This makes it possible to reduce the number of light receivers.

[47] In the measurement apparatus according to any one of the above [41] to [46], the test light may be pulsed light. The first optical power and the second optical power may be a power of light emitted from the first core and a power of light emitted from the second core, respectively, at a timing when a delay time corresponding to twice an optical distance between the first end portion and the reflecting surface elapses after the test light enters the core. This makes it possible to eliminate the influence of backward Rayleigh scattering light from the first optical power and the second optical power, and to measure crosstalk with higher accuracy.

[48] In the measurement apparatus according to any one of the above [41] to [47], the light reflecting surface may be an end surface of the multi-core optical fiber. The measurement apparatus may further include a holding unit configured to hold the multi-core optical fiber such that the end surface is in contact only with a gas. Thus, the reflectance at the light reflecting surface is increased, the first optical power and the second optical power are further increased, so that the crosstalk can be measured with higher accuracy.

[49] The measurement apparatus according to any one of the above [41] to [47] may further include a second multi-core optical fiber having a first end surface on which a reflective film serving as the light reflecting surface is provided. The second multi-core optical fiber has a second end surface connected to an end surface of the multi-core optical fiber in the second end portion. Thus, the reflectance at the light reflecting surface is increased, the first optical power and the second optical power are further increased, so that the crosstalk can be measured with higher accuracy.

[50] The measurement apparatus according to any one of the above [41] to [47] may further include N single-core optical fibers each having a first end surface on which a reflective film serving as the light reflecting surface is provided. Each of the N single-core optical fibers has a second end surface optically coupled to a corresponding one of the N cores in the second end portion. Thus, the reflectance at the light reflecting surface is increased, the first optical power and the second optical power are further increased, so that the crosstalk can be measured with higher accuracy.

[Details of Embodiments of Present Disclosure]

Specific examples of an inter-spatial-channel crosstalk measurement method, an inter-core crosstalk measurement method for a multi-core optical fiber, an inter-spatial-channel crosstalk measurement apparatus, and an inter-core crosstalk measurement apparatus for a multi-core optical fiber according to the embodiment will be described with reference to the drawings as necessary. The present invention is not limited to these examples, but is defined by the scope of the claims, and is intended to include all modifications within the meaning and scope equivalent to the scope of the claims. In the following description, the same elements are denoted by the same reference numerals in the description of the drawings, and redundant description will be omitted.

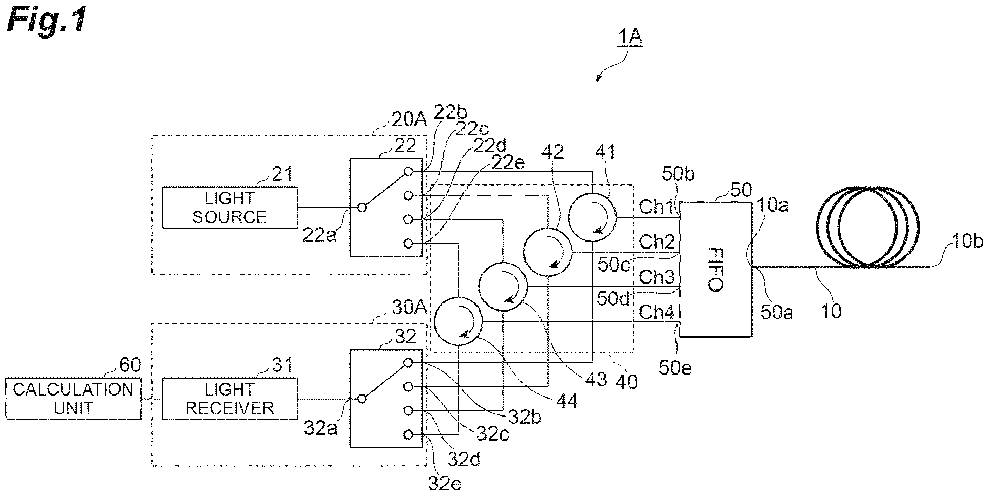

FIG. 1 is a diagram showing a configuration of a measurement apparatus 1A according to an embodiment of the present disclosure. The measurement apparatus 1A is an apparatus for measuring inter-spatial-channel crosstalk of a space division multiplexing (SDM) optical system. The concept of the SDM optical system includes an SDM optical fiber, an SDM optical device, and a system in which one or more SDM optical fibers and one or more SDM optical devices are optically coupled. The SDM optical fiber is, for example, a multi-core optical fiber (hereinafter referred to as MCF) having a plurality of cores in one fiber or a multi-mode optical fiber having a plurality of spatial modes (also referred to as propagation modes or guided modes) in one core. Each core of the MCF has one or more spatial modes. Thus, there is an optical fiber that is both MCF and MMF. The SDM optical fiber includes all optical fibers having a plurality of spatial modes in one fiber. The spatial channel in the SDM optical fiber corresponds to a spatial mode. The concept of the SDM optical device includes an optical device different from the SDM optical fiber, which has a plurality of spatial channels, for example, an optical waveguide chip, a fan-out for the SDM optical fiber (a fan-out of a spatial optical system, a fiber bundle type fan-out, an optical waveguide type fan-out, and the like). For example, in an optical device having a core, such as an optical waveguide chip, a fiber bundle type fan-out, or an optical waveguide type fan-out, the spatial mode corresponds to a spatial channel. In the SDM optical device of the spatial optical system, the spatial channel and the spatial mode do not necessarily correspond to each other in a portion where light propagates in free space. However, the SDM optical device of the spatial optical system is optically coupled to another optical fiber or optical device at the entrance/exit portion. Thus, an optical path in the SDM optical device of the spatial optical system equivalent to a spatial mode of another optical fiber or optical device corresponds to a spatial channel. The concept of the SDM optical system includes, for example, an SDM optical fiber and an SDM optical device optically coupled or connected to each other. The SDM optical system has a plurality of spatial channels. In the following description, an apparatus for measuring inter-core crosstalk of an MCF 10 as an example of the SDM optical system will be described.

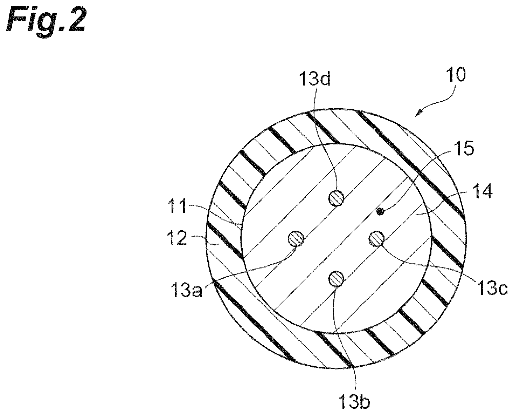

First, the configuration of the MCF 10 will be described. The MCF 10 includes a first end portion (first entrance/exit portion) 10a and a second end portion (second entrance/exit portion) 10b opposite to the first end portion 10a. FIG. 2 is a diagram showing a cross-section perpendicular to a central axis of the MCF 10. As shown in FIG. 2, the MCF 10 includes a glass fiber 11 and a coating resin 12 that coats an outer peripheral surface of the glass fiber 11. The glass fiber 11 has N cores (with N being an integer of 2 or more) as N spatial channels. In the illustrated example, the glass fiber 11 has four (that is, N = 4) cores 13a, 13b, 13c, and 13d. The glass fiber 11 further has a cladding 14. Further, the glass fiber 11 may have a marker 15. In the illustrated example, the cores 13a, 13b, 13c, and 13d are arranged at equal intervals on a concentric circle having a center on the central axis of the MCF 10 in a cross-section orthogonal to the central axis of the MCF 10. The cladding 14 is a common cladding surrounding the cores 13a, 13b, 13c, and 13d and the marker 15. The marker 15 has a refractive index different from that of the cladding 14.

Reference is made again to FIG. 1. The measurement apparatus 1A includes a light source unit 20A, an optical detection unit 30A, a circulator unit (optical coupler unit) 40, a fan-in/fan-out (FIFO) 50, and a calculation unit 60.

The light source unit 20A emits test light that enters one of the cores 13a, 13b, 13c, or 13d in the first end portion 10a. The light source unit 20A of the embodiment includes a single light source 21 and a first optical switch 22. The first optical switch 22 includes at least one input port 22a and at least as many output ports 22b, 22c, 22d, and 22e as the cores 13a, 13b, 13c, and 13d. The first optical switch 22 selectively optically couples the input port 22a to one of the output ports 22b, 22c, 22d, or 22e. The input port 22a is optically coupled to the light source 21.

The optical detection unit 30A detects light emitted from each of the cores 13a, 13b, 13c, and 13d in the first end portion 10a. The optical detection unit 30A of the embodiment includes a single light receiver (power meter) 31 and a second optical switch 32. The second optical switch 32 includes at least one output port 32a and at least as many input ports 32b, 32c, 32d, and 32e as the cores 13a, 13b, 13c, and 13d. The second optical switch 32 selectively optically couples the output port 32a to one of the input ports 32b, 32c, 32d, or 32e. The output port 32a is optically coupled to the light receiver 31.

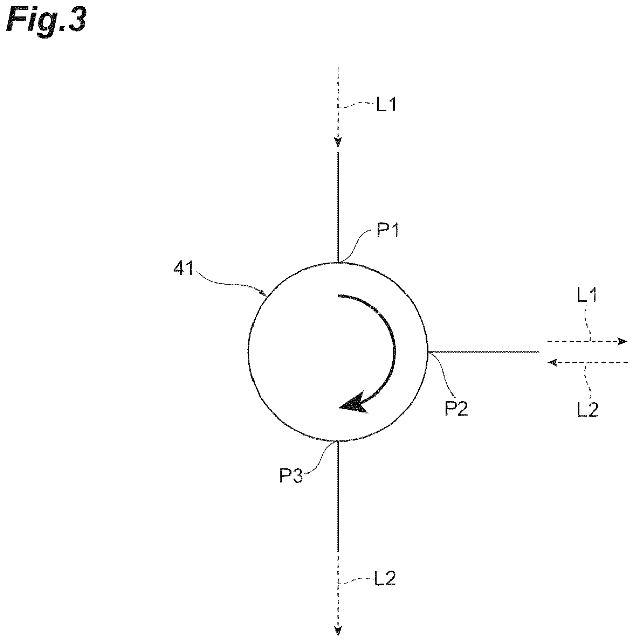

The circulator unit 40 includes optical circulators 41, 42, 43, and 44, which are three-port optical couplers, the number of which is the same as the number of the cores 13a, 13b, 13c, and 13d. FIG. 3 is a diagram showing the configuration of the optical circulator 41. The configuration of each of optical circulators 42, 43, and 44 is the same as the configuration of the optical circulator 41. As shown in FIG. 3, the optical circulator 41 has a first port P1, a second port P2, and a third port P3. The optical circulator 41 outputs a light L1, which is input to the first port P1, from the second port P2 with low loss, and outputs a light L2, which is input to the second port P2, from the third port P3 with low loss. The light L1 input to the first port P1 is hardly output from the third port P3. The light L2 input to the second port P2 is hardly output from the first port P1. The light input to the third port P3 is hardly output from either the first port P1 and the second port P2.

An insertion loss from the first port P1 to the second port P2 is, for example, 1 dB or less. An insertion loss from the first port P1 to the third port P3 is, for example, 30 dB or more, or 40 dB or more. An insertion loss from the second port P2 to the third port P3 is, for example, 1 dB or less. An insertion loss from the second port P2 to the first port P1 is, for example, 30 dB or more, or 40 dB or more. An insertion loss from the third port P3 to each of the first port P1 and the second port P2 is, for example, 30 dB or more, or 40 dB or more.

Reference is made again to FIG. 1. The first port P1 of each of the optical circulators 41, 42, 43, and 44 is optically coupled to a corresponding one of the output ports 22b, 22c, 22d, and 22e of the first optical switch 22. Thus, the first optical switch 22 can selectively optically couple the light source 21 to the first port P1 of one of the optical circulators 41, 42, 43 or 44. The third port P3 of each of the optical circulators 41, 42, 43, and 44 and is optically coupled to a corresponding one of the input ports 32b, 32c, 32d, and 32e of the second optical switch 32. Thus, the second optical switch 32 can selectively optically couple the light receiver 31 to the third port P3 of one of the optical circulators 41, 42, 43 or 44. In the above description, the three-port optical circulators 41, 42, 43, and 44 are exemplified as the three-port optical couplers, but the three-port optical coupler is not limited thereto, and a $1 \times 2$ optical fiber coupler, or a $2 \times 2$ optical fiber coupler in which one port is subjected to termination processing for reflection reduction may be used. By using a fused optical fiber coupler as the optical fiber coupler, reflection in the optical fiber coupler can be suppressed. The optical fiber coupler may be a waveguide type optical fiber coupler.

When the three-port optical coupler is a $1 \times 2$ optical fiber coupler, or a $2 \times 2$ optical fiber coupler in which one port is subjected to termination processing for reflection reduction, the three-port optical coupler has the first port P1, the second port P2, and the third port P3. The three-port optical coupler outputs the light L1 input to the first port P1 from the second port P2 with low loss, and outputs the light L2 input to the second port P2 from the third port P3 with low loss. The light L1 input to the first port P1 is hardly output from the third port P3. The light L2 input to the second port P2 is output from the first port P1 with low loss, and the light input to the third port P3 is also output from both the second ports P2 with low loss, but there is no significant influence on the measurement. The light input to the third port P3 is hardly output from the first port P1. However, in the $1 \times 2$ optical fiber coupler, or in the $2 \times 2$ optical fiber coupler in which one port is subjected to termination processing for reflection reduction, the insertion loss between the port P1 and the port P2 and the insertion losses between the port P2 and the port P3, which have low insertion loss, are higher than those in the optical circulator. This is because, for example, when the $1 \times 2$ optical fiber coupler or the $2 \times 2$ optical fiber couplers is an optical power splitter having a branching ratio of 50:50, a loss of about 3 dB occurs as a theoretical loss.

The insertion loss from the first port P1 to the second port P2 is, for example, 4 dB or less. The insertion loss from the first port P1 to the third port P3 is, for example, 40 dB or more, or 50 dB or more. The insertion loss from the second port P2 to the third port P3 is, for example, 4 dB or less. The insertion loss from the third port P3 to the first port P1 is, for example, 40 dB or more, or 50 dB or more.

The FIFO 50 is an optical component that optically couples each of the cores 13a, 13b, 13c, and 13d in the first end portion 10a of the MCF 10 to the second port P2 of a corresponding one of the optical circulators 41, 42, 43, and 44. The FIFO 50 includes an input/output port 50a connected to the MCF 10, and input/output ports 50b, 50c, 50d, and 50e connected to the second ports P2 of the optical circulators 41, 42, 43 and 44, respectively. The input/output port 50a of the FIFO 50 is formed by, for example, reducing the diameters of the tip portions of the same number of single-core fibers as the number of cores 13a, 13b, 13c, and 13d of the MCF 10 by etching and bundling the tip portions. In the bundled tip portions, the interval between the cores of the single-core fibers is the same as the interval between the cores 13a, 13b, 13c, and 13d of the MCF 10. The bundled tip portions abut on the first end portion 10a of the MCF 10, and thus the first end of each of the single-core fibers is optically coupled to a corresponding one of the cores 13a, 13b, 13c, and 13d. The second end of each of the single-core fibers constitutes the input/output ports 50b, 50c, 50d, and 50e, and is optically coupled to the second port P2 of a corresponding one of the optical circulators 41, 42, 43, and 44.

The calculation unit 60 calculates a magnitude of inter-core crosstalk based on the detection result in the optical detection unit 30A. The calculation unit 60 is configured by a computer including, for example, a CPU, a memory, and a storage apparatus. The storage apparatus stores software for calculating the magnitude of inter-core crosstalk. The magnitude of inter-core crosstalk is calculated by the CPU reading and executing the software. The calculation unit 60 is electrically (or communicably) connected to the light receiver 31.

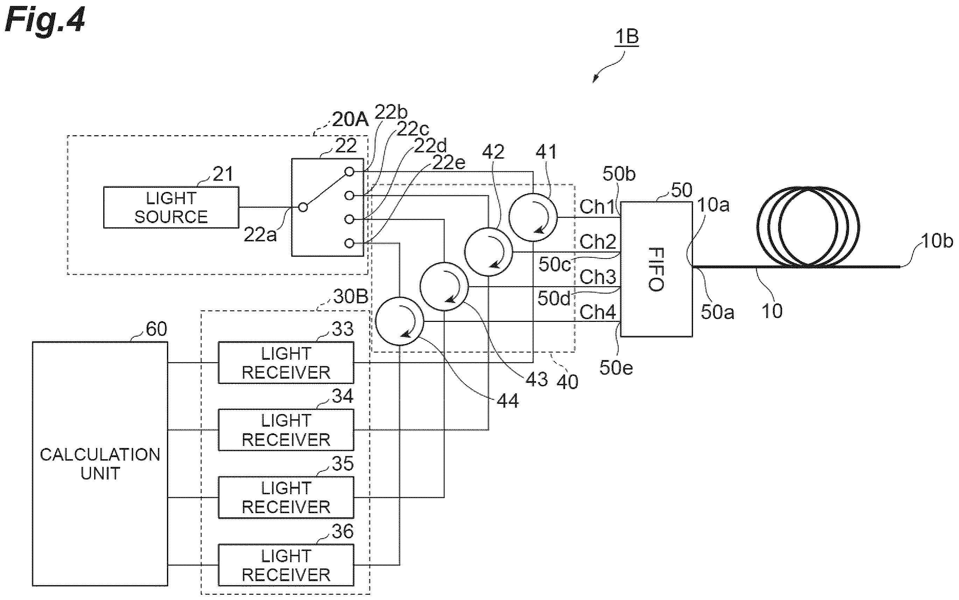

FIG. 4 is a diagram showing a configuration of a measurement apparatus 1B as one modification of the measurement apparatus 1A. The measurement apparatus 1B includes an optical detection unit 30B instead of the optical detection unit 30A shown in FIG. 1. The optical detection unit 30B includes light receivers (power meters) 33, 34, 35, and 36, the number of which is the same as the number of the cores 13a, 13b, 13c, and 13d of the MCF 10. Each of the light receivers 33, 34, 35, and 36 is optically coupled to the third port P3 of a corresponding one of the optical circulators 41, 42, 43, and 44. The calculation unit 60 is electrically (or communicably) connected to the light receivers 33, 34, 35, and 36.

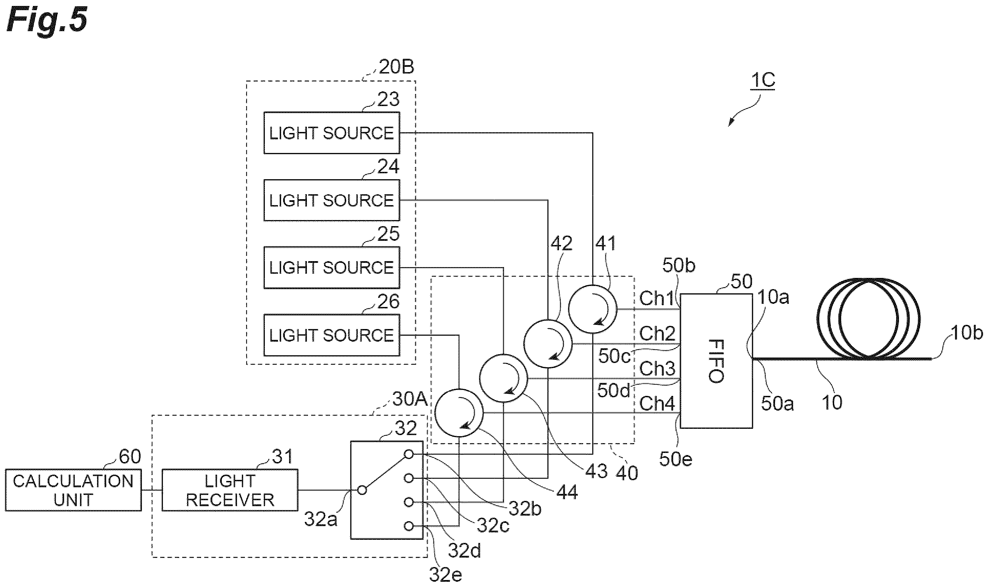

FIG. 5 is a diagram showing a configuration of a measurement apparatus 1C as another modification of the measurement apparatus 1A. The measurement apparatus 1C includes a light source unit 20B instead of the light source unit 20A shown in FIG. 1. The light source unit 20B includes light sources 23, 24, 25, and 26, the number of which is the same as the number of the cores 13a, 13b, 13c, and 13d of the MCF 10. Each of the light sources 23, 24, 25, and 26 is optically coupled to the first port P1 of a corresponding one of the optical circulators 41, 42, 43, and 44. The measurement apparatus may include the optical detection unit 30B instead of the optical detection unit 30A and may include the light source unit 20B instead of the light source unit 20A.

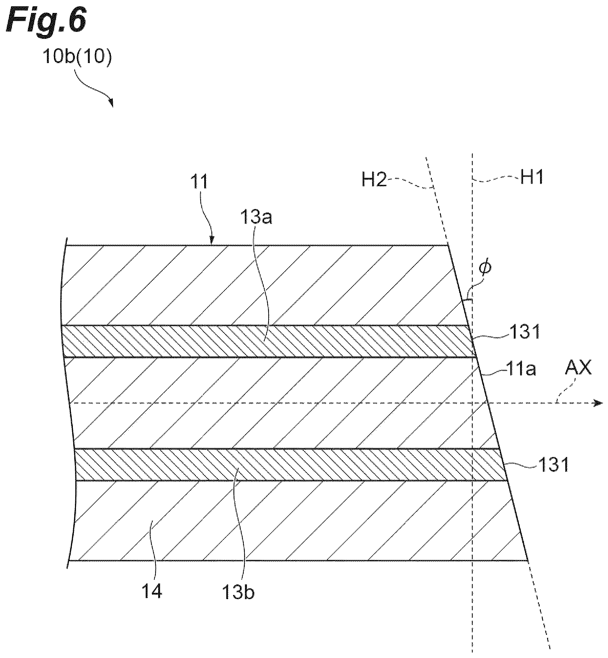

Here, examples of the configuration of the second end portion 10b of the MCF 10 will be described. A light reflecting surface that reflects at least part of the test light propagating from the first end portion 10a to the second end portion 10b in each of the cores 13a, 13b, 13c, and 13d is formed or provided in the second end portion 10b. The light reflecting surface is configured to reflect the test light with a reflectance of 0.001 or more, 0.01 or more, 0.1 or more, or 0.5 or more. FIGS. 6 to 12 are cross-sectional views each showing an example of the light reflecting surface of the second end portion 10b, and each shows a cross-section along a central axis AX of the glass fiber 11 of the MCF 10. In these figures, the coating resin 12 is not shown. The second end portion 10b includes an end surface (entrance/exit surface) 11a of the glass fiber 11. Here, the reflectance can be defined by Pr/Pi, where Pi is the power of light entering the light reflecting surface, and Pr is the power of light reflected from the light reflecting surface. In IEC-61300-3-6, a value obtained by multiplying a decibel value of the reflectance (Pr/Pi) by -1 is defined as a return loss, and a method for measuring the retern loss is exemplified. Thus, the reflectance at the light reflecting surface can also be measured by the method described in IEC-61300-3-6.

In the example shown in FIG. 6, an end surface 11a of the glass fiber 11 is a light reflecting surface that reflects at least part of the test light due to the refractive index difference between the glass fiber 11 and the external medium (for example, air). The end surface 11a in this example is a cleaved or polished flat surface. In this example, an end surface 131 of each of the cores 13a, 13b, 13c, and 13d is a surface that is aligned with the end surface 11a without a stepped portion (the end surfaces 131 may be a depression or protrusion sufficiently smaller than 1 $\mu$m relative to the end surface 11a). When an imaginary plane H2 parallel to the end surface 11a is defined, the center of the end surface 131 of each of the cores 13a, 13b, 13c, and 13d is in contact with the imaginary plane H2 on the end surface 11a. The imaginary plane H2 forms an angle $\varphi$ with an imaginary plane H1 orthogonal to the central axis AX of the MCF 10. The angle $\varphi$ is an angle (unit: rad) defined by the radian method. In one example, the angle $\varphi$ is 0 rad to $2\pi/180$ rad.

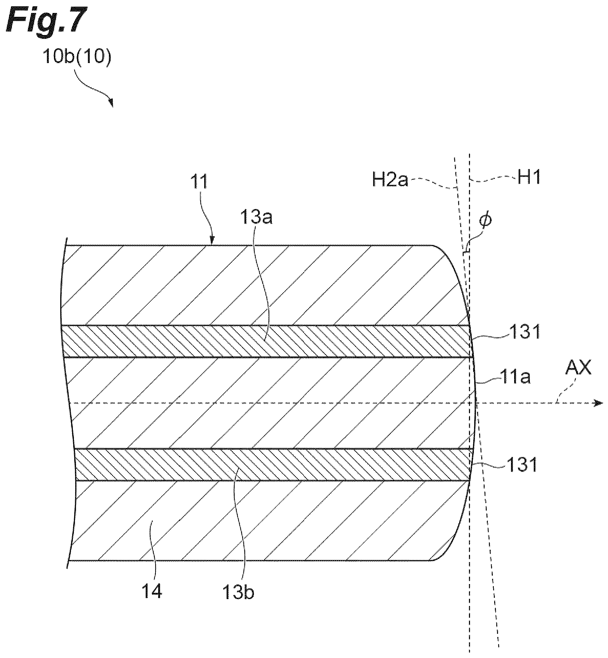

In the example shown in FIG. 7, the end surface 11a of the glass fiber 11 is also a light reflecting surface that reflects at least part of the test light due to the refractive index difference between the glass fiber 11 and the external medium (for example, air). However, the end surface 11a of this example is not flat, but is a curved surface that is convex outward, that is, toward the external medium. In this example, the end surface 131 of each of the cores 13a, 13b, 13c, and 13d is a surface that is aligned with the end surface 11a without a stepped portion (the end surfaces 131 may be a depression or protrusion sufficiently smaller than 1 $\mu$m relative to the end surface 11a). In the end surface 11a, an imaginary plane H2a is defined that is in contact with the center of the end surface 131 of one of the cores 13a, 13b, 13c, and 13d. At this time, the imaginary plane H2a forms the angle $\varphi$ with the imaginary plane H1 orthogonal to the central axis AX of the MCF 10. The range of the angle $\varphi$ is the same as the configuration shown in FIG. 6.

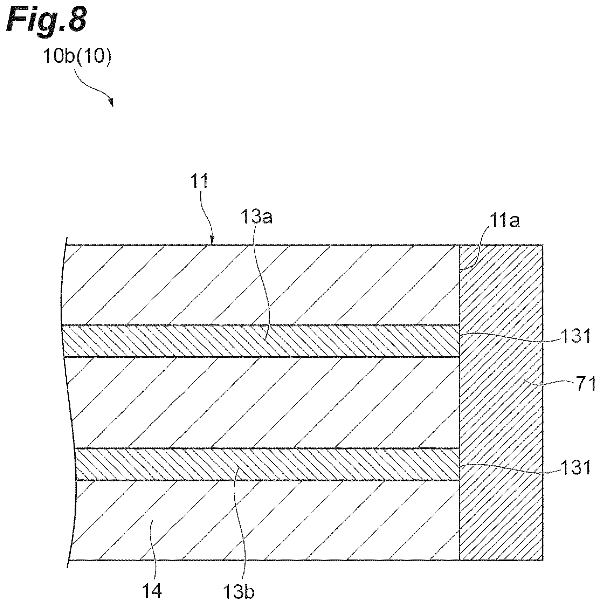

In the example shown in FIG. 8, a reflective film 71 is provided on the end surface 11a of the glass fiber 11. The reflective film 71 is, for example, a dielectric multilayer film or a metal film. The interface between the reflective film 71 and the glass fiber 11 (i.e., the end surface 11a) is a light reflecting surface that reflects at least part of the test light.

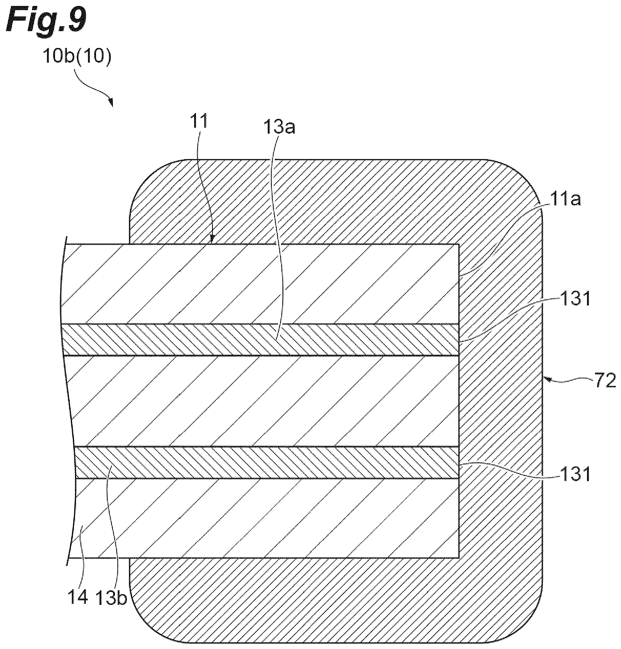

In the example shown in FIG. 9, a reflective member 72 is provided on the end surface 11a of the glass fiber 11. The reflective member 72 is provided from the end surface 11a to the side surface of the glass fiber 11 and surrounds the second end portion 10b. The reflective member 72 is, for example, a dielectric multilayer film, a metal film, or a liquid metal. The interface between the reflective member 72 and the glass fiber 11 (i.e., the end surface 11a) is a light reflecting surface that reflects at least part of the test light.

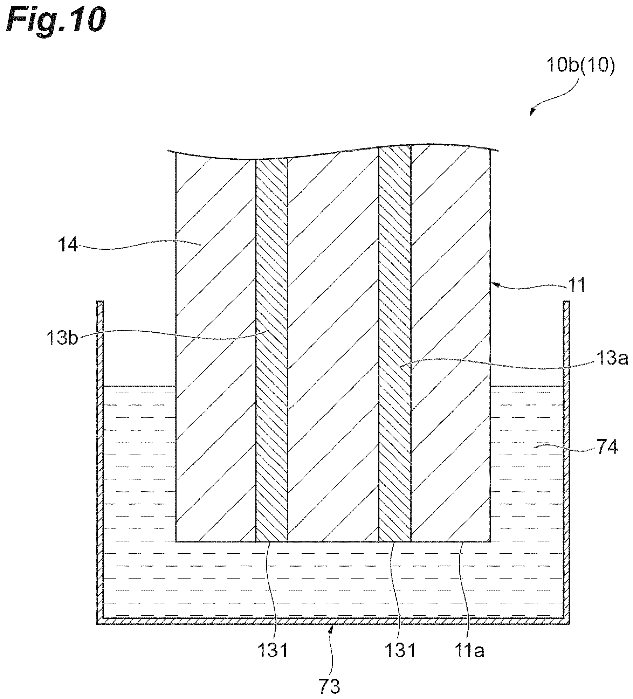

In the example shown in FIG. 10, the end surface 11a of the glass fiber 11 is immersed in a liquid metal 74. The liquid metal 74 is contained in a container 73 having an opening at the top, and the end surface 11a of the glass fiber 11 is immersed in the liquid metal 74 from above. The end surface 11a is in contact with the liquid metal 74, and thus the interface between the liquid metal 74 and the glass fiber 11 (that is, the end surface 11a) serves as a light reflecting surface that reflects at least part of the test light.

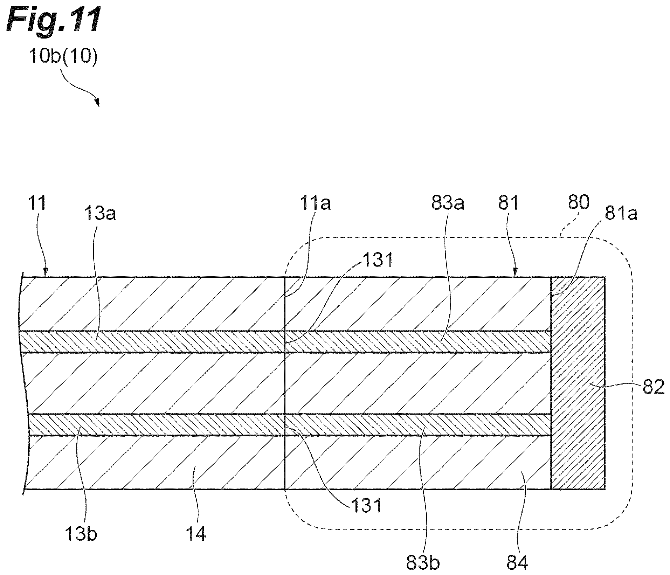

In the example shown in FIG. 11, the measurement apparatus 1A, 1B or 1C further includes a reflection enhancing device 80 in the second end portion 10b of the MCF 10. The reflection enhancing device 80 includes an MCF 81 different from the MCF 10 and a reflective film 82 provided on a first end surface 81a of the MCF 81. The reflective film 82 is, for example, a dielectric multilayer film or a metal film. The second end surface of the MCF 81 is connected to the end surface 11a of the MCF 10 in the second end portion 10b. That is, the MCF 81 has the same number of cores (only two cores 83a and 83b are shown in the figure) as the number of the cores 13a, 13b, 13c, and 13d of the MCF 10, and these cores are optically coupled to the cores 13a, 13b, 13c, and 13d of the MCF 10, respectively. The connection between the MCF 81 and the MCF 10 may be fusion splicing or may be connection by an optical connector. In this example, the reflective film 82 constitutes a light reflecting surface that reflects at least part of the test light.

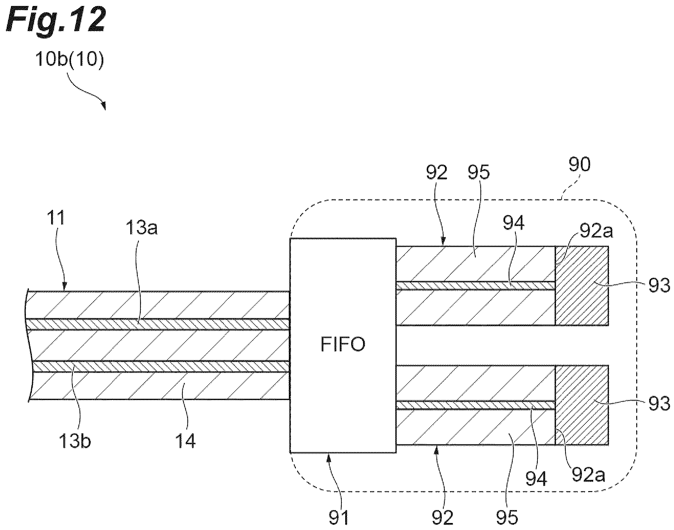

In the example shown in FIG. 12, the measurement apparatus 1A, 1B or 1C further includes a reflection enhancing device 90 in the second end portion 10b of the MCF 10. The reflection enhancing device 90 includes single-core optical fibers (SCFs) 92, the number of which is the same as the number of the cores 13a, 13b, 13c, and 13d of the MCF 10, and a FIFO 91. A reflective film 93 serving as a light reflecting surface that reflects at least part of the test light is provided on a first end surface 92a of each SCF 92. The reflective film 93 is, for example, a dielectric multilayer film or a metal film. The second end surface of each of SCFs 92 is optically coupled to a corresponding one of the cores 13a, 13b, 13c, and 13d in the second end portion 10b via the FIFO 91.

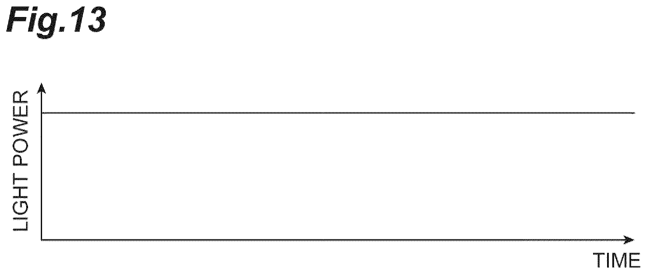

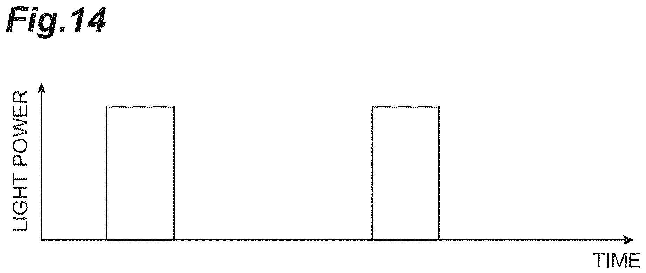

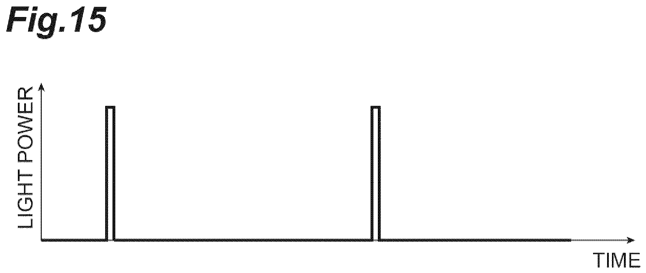

Reference is made again to FIG. 1. The test light output from the light source unit 20A may be any of continuous light, chopped light, and pulsed light. FIG. 13 is a graph schematically showing a time waveform of light power of continuous light. When the test light is continuous light, the light power is constant and independent of time. In addition, when the test light is continuous light, commonly used optical power meters can be used as the light receivers 31, 33, 34, and 35. FIG. 14 is a graph schematically showing a time waveform of light power of chopped light. When the test light is chopped light, the time waveform of the light power is a rectangular wave. The duty ratio (the ratio of the time during which the light power is at a peak to the total time) is, for example, 0.5 or 0.25. When the test light is chopped light, light power meters applicable to chopping detection (synchronous detection, phase detection) are used as the light receivers 31, 33, 34, and 35, and thus detection can be performed while measurement noise caused by environmental light or the like is suppressed, and detection sensitivity can be increased. FIG. 15 is a graph schematically showing a time waveform of light power of pulsed light. When the test light is pulsed light, a plurality of pulse waveforms are repeated at a predetermined cycle, and measurement is repeatedly performed and averaged, whereby measurement noise can be suppressed. Since the pulse width is sufficiently smaller than the pulse repetition period, the time waveform of the light power can be measured with a sufficiently high spatial resolution with respect to the entire length of the optical fiber.

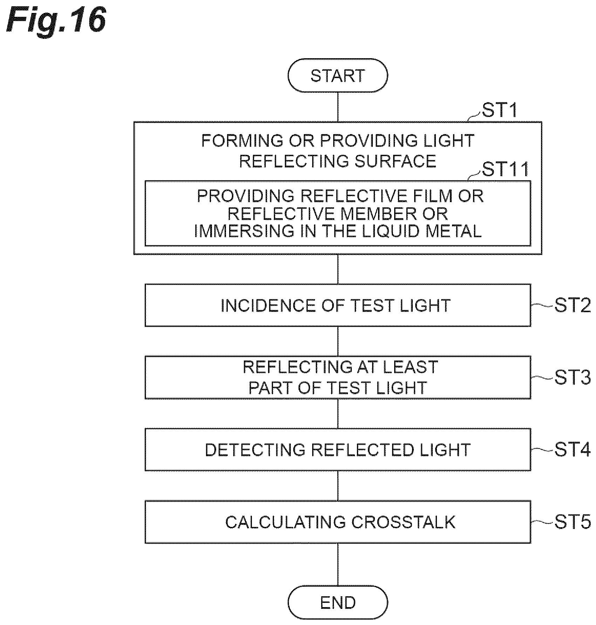

Next, the operation of the measurement apparatus 1A, 1B, or 1C according to the embodiment will be described, and the inter-core crosstalk measurement method of the embodiment using the measurement apparatus 1A, 1B, or 1C will be described. FIG. 16 is a flowchart showing the inter-core crosstalk measurement method according to the embodiment.

First, as step ST1, a light reflecting surface is formed or provided in the second end portion 10b. Examples of the light reflecting surface are as described in FIGS. 8 to 10. That is, the step ST1 may include step ST11 of providing the reflective film 71 (see FIG. 8) or the reflective member 72 (see FIG. 9) on the end surface 11a of the glass fiber 11 or immersing the end surface 11a in the liquid metal 74 (see FIG. 10).

Next, as step ST2, test light is caused to enter any one core (first spatial channel or first core, here, the core 13a as an example) of the cores 13a, 13b, 13c, and 13d in the first end portion 10a from the light source unit 20A or 20B. At this time, in the light source unit 20A (see FIGS. 1 and 4), the first optical switch 22 is switched to cause the test light to enter the core 13a. The first optical switch 22 may be switched by a control signal from the calculation unit 60 or may be manually switched. In the light source unit 20B (see FIG. 5), the test light enters from the light source 23 corresponding to the core 13a among the light sources 23, 24, 25, and 26.

Subsequently, as step ST3, at least part of the test light is reflected on the light reflecting surface of the second end portion 10b.

Thereafter, a part of the light reflected on the light reflecting surface is emitted from the core 13a, and another part of the light is emitted from a core (second spatial channel or second core, here, each of the cores 13b, 13c, and 13d) different from the core 13a due to inter-core crosstalk. In step ST4, a first optical power, which is the power of light emitted from the core 13a, and a second optical power, which is the power of light emitted from each of the cores 13b, 13c, and 13d, are detected. At this time, in the optical detection unit 30A (see FIGS. 1 and 5), the second optical switch 32 is switched to sequentially cause the light from the cores 13a, 13b, 13c, and 13d to enter the light receiver 31. The second optical switch 32 may be switched by a control signal from the calculation unit 60 or may be manually switched. In the optical detection unit 30B (see FIG. 4), the light from the cores 13a, 13b, 13c, and 13d is caused to enter the light receivers 33, 34, 35, and 36 corresponding to the cores 13a, 13b, 13c, and 13d, respectively.

The first optical power is a total sum of optical power components emitted from the core 13a (first spatial channel) among return optical power components of the test light including backscattered light at every positions in a longitudinal direction of the MCF 10. The second optical power is a total sum of optical power components emitted from each of the cores 13b, 13c, and 13d (second spatial channels) among the return optical power components of the test light including backscattered light at every positions in the longitudinal direction of the MCF 10.

Subsequently, in step ST5, a magnitude of crosstalk between the core 13a and the cores 13b, 13c, and 13d is calculated by the calculation unit 60, based on the first optical power and the second optical power. At this time, a magnitude $XT$ of the crosstalk between the core 13a and the cores 13b, 13c, or 13d is calculated by the following Formula (1) based on a first optical power $PW1$ and a second optical power $PW2$.

[Math. 9]

$$XT = \frac{1}{2}\left(\frac{PW2}{PW1}\right) \qquad \cdots \quad (1)$$

When the first optical power PW1 is measured, the power of light emitted from the core 13a in the first end portion 10a is measured. At this time, the light emitted from the core 13a includes not only the light reflected on the light reflecting surface of the second end portion 10b but also backscattered light generated while the test light entered one of the cores 13a, 13b, 13c, and 13d in the first end portion 10a propagates in the longitudinal direction in the MCF 10 and return light (noise light) such as unintended reflected light generated at portions other than the light reflecting surface. Similarly, when the second optical power PW2 is measured, the power of light emitted from each of the core 13b, 13c, or 13d in the first end portion 10a is measured. At this time, the light emitted from each of the core 13b, 13c, or 13d includes not only the light reflected on the light reflecting surface of the second end portion 10b but also backscattered light generated while the test light entered one of the cores 13a, 13b, 13c, and 13d in the first end portion 10a propagates in the longitudinal direction in the MCF 10 and return light (noise light) such as unintended reflected light generated at portions other than the light reflecting surface.

The above-described steps ST2 to ST5 are sequentially repeated with the cores 13a, 13b, 13c, and 13d as the first core (first spatial channel) on which the test light enters.

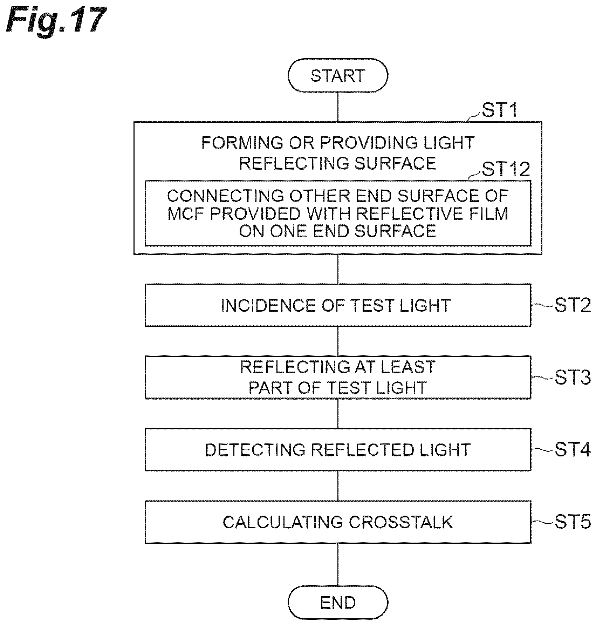

FIG. 17 is a flowchart showing a modification of the inter-core crosstalk measurement method. In this modification, the step ST1 of forming or providing the light reflecting surface in the second end portion 10b includes step ST12 instead of step ST11 described above. In step ST12, as shown in FIG. 11, the second end surface of the MCF 81, on which the reflective film 82 serving as a light reflecting surface is provided on the first end surface 81a, is connected to the end surface 11a of the MCF 10 in the second end portion 10b.

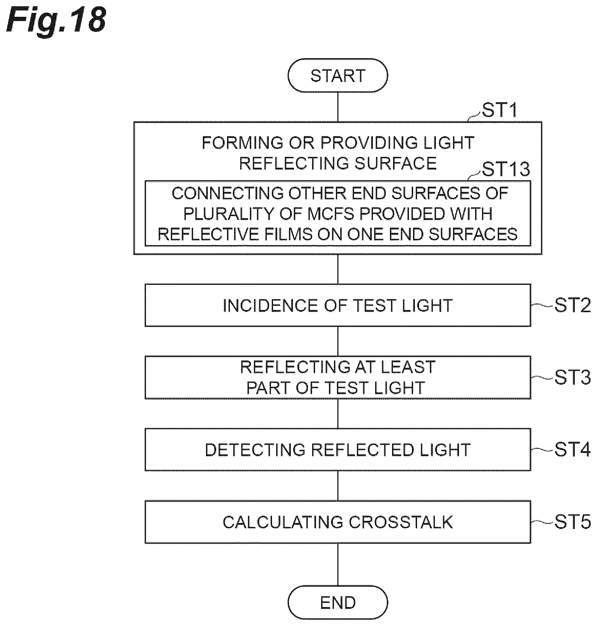

FIG. 18 is a flow chart showing another modification of the inter-core crosstalk measurement method. In this modification, the step ST1 of forming or providing the light reflecting surface in the second end portion 10b includes step ST13 instead of step ST11 described above. In step ST13, as shown in FIG. 12, the second end surface of each of the plurality of SCFs 92, each having the first end surface 92a on which the reflective film 93 serving as the light reflecting surface is provided, is optically coupled to a corresponding one of cores 13a, 13b, 13c, and 13d in the second end portion 10b.

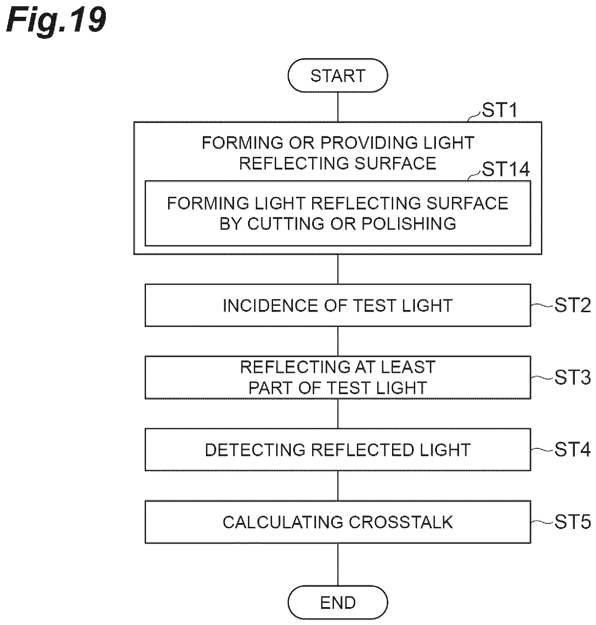

FIG. 19 is a flow chart showing still another modification of the inter-core crosstalk measurement method. In this modification, the step ST1 of forming or providing the light reflecting surface in the second end portion 10b includes step ST14 instead of step ST11 described above. In step ST14, as shown in FIG. 6 or FIG. 7, the end surface 11a of the glass fiber 11 is made flat or curved by polishing, cleaving, or the like, and the end surface 11a is used as the light reflecting surface. Alternatively, the substantially flat end surface 11a which is merely cleaved may be used as the light reflecting surface.

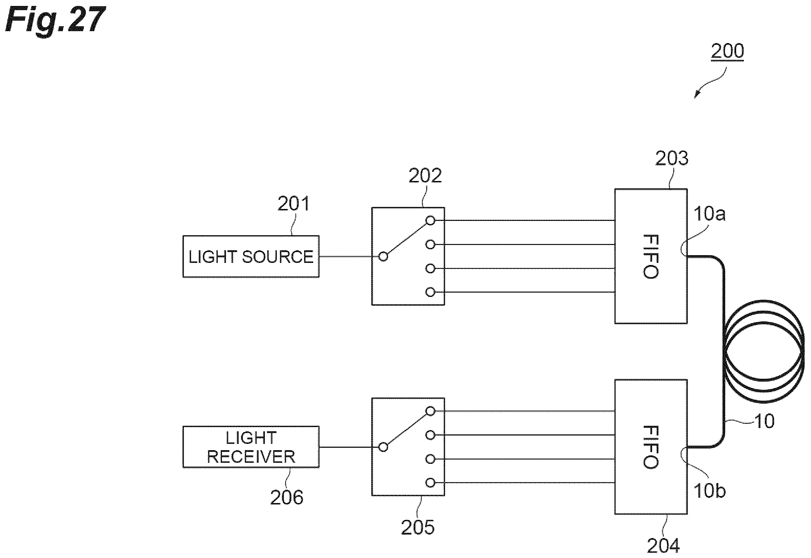

The effects obtained by the measurement apparatuses 1A, 1B, and 1C and the inter-core crosstalk measurement method according to the embodiment described above will be described. FIG. 27 is a diagram schematically showing the configuration of a measurement apparatus 200 according to a reference example. The measurement apparatus 200 shown in FIG. 27 is an apparatus for measuring inter-core crosstalk of the MCF 10, and includes a single light source 201, a first optical switch 202, a FIFO 203, a FIFO 204, a second optical switch 205, and a single light receiver 206. The light source 201, the first optical switch 202, and the FIFO 203 are connected to the first end portion 10a of the MCF 10. The FIFO 204, the second optical switch 205, and the light receiver 206 are connected to the second end portion 10b of the MCF 10. The test light output from the light source 201 enters the first core (first spatial channel) selected by the first optical switch 202 among the plurality of cores included in the MCF 10 at the first end portion 10a. In the second end portion 10b, the second optical switch 205 sequentially selects the first core on which the test light enters and the second core (second spatial channel) different from the first core. The light power of the test light propagated through the first core and the light power of the crosstalk light propagated through the second core are detected by the light receiver 206. Based on these light powers, inter-core crosstalk is calculated.

In the measurement apparatus 200 shown in FIG. 27, the test light is caused to enter the first core in the first end portion 10a of the MCF 10, and the power of the test light emitted from the first core and the second core in the second end portion 10b of the MCF 10 is detected. However, when the MCF 10 to be measured has been laid, it may not be easy to connect the unit including the light source 201, the first optical switch 202, and the FIFO 203 to the first end portion 10a of the MCF 10, and to connect the unit including the FIFO 204, the second optical switch 205, and the light receiver 206 to the second end portion 10b of the MCF 10 which is far away from the first end portion 10a.

In the measurement apparatuses 1A, 1B, and 1C and the measurement method of the embodiment, it is sufficient to connect the light source unit 20A or 20B and the optical detection unit 30A or 30B to the first end portion 10a of the MCF 10, and it is not necessary to connect any of them to the second end portion 10b. Thus, for example, even in the MCF 10 in which the first end portion 10a and the second end portion 10b are separated from each other by several kilometers or more, the light source unit 20A or 20B and the optical detection unit 30A or 30B can be easily connected to the MCF 10. In the measurement apparatuses 1A, 1B, and 1C and the measurement method of the embodiment, the magnitude of crosstalk is calculated based on the power of light reflected on the light reflecting surface provided (or formed) in the second end portion 10b. The power of the light reflected on the light reflecting surface is much larger than the power of the backward Rayleigh scattering light. Thus, even when the crosstalk is small, the detection signal is not buried in noise, and the inter-core crosstalk can be suitably measured.

As described above, the light reflecting surface may be configured to reflect at least part of the test light with a reflectance of 0.001 or more. In this case, the first optical power PW1 and the second optical power PW2 are set to have a sufficient magnitude, and an error that the backward Rayleigh scattering affects to the measurement result is reduced, so that the measurement accuracy of the inter-core crosstalk can be improved.

As described above, the light reflecting surface may be the end surface 11a of the MCF 10, and the step ST1 may include step ST11 of providing the reflective film 71 or the reflective member 72 on the end surface 11a or immersing the end surface 11a in the liquid metal 74. Thus, the reflectance at the light reflecting surface is increased, the first optical power PW1 and the second optical power PW2 are further increased, so that the crosstalk can be measured with higher accuracy.

As described above, each of the measurement apparatuses 1A, 1B, and 1C may include the MCF 81 in which the reflective film 82 serving as a light reflecting surface is provided on the first end surface 81a. The second end surface of the MCF 81 is connected to the end surface 11a of the MCF 10 in the second end portion 10b. Similarly, in the measurement method, the step ST1 may include step ST12 of connecting the second end surface of the MCF 81, in which the reflective film 82 serving as the light reflecting surface is provided on the first end surface 81a, to the end surface 11a of the MCF 10 in the second end portion 10b. According to the measurement apparatuses 1A, 1B, and 1C and the measurement method, the reflectance at the light reflecting surface is increased, the first optical power PW1 and the second optical power PW2 are further increased, so that the crosstalk can be measured with higher accuracy. Further, since it is sufficient to connect the MCF 81 to the end surface 11a of the MCF 10 without providing a light reflective film on the end surface 11a of the MCF 10, the measurement operation can be facilitated.

As described above, each of the measurement apparatuses 1A, 1B, and 1C may include the same number of the SCFs 92 as the cores 13a, 13b, 13c, and 13d, each having the reflective film 93 serving as the light reflecting surface provided on the first end surface 92a. The second end surface of each of SCFs 92 is optically coupled to a corresponding one of the cores 13a, 13b, 13c, and 13d in the second end portion 10b. Similarly, in the measurement method, the step ST1 may include step ST13 of optically coupling the second end surface of each of the SCFs 92 to a corresponding one of the cores 13a, 13b, 13c, and 13d in the second end portion 10b, each of the SCFs 92 having the first end surface 92a on which the reflective film 93 serving as the light reflecting surface is provided, and the number of the SCFs 92 is the same as the number of the cores 13a, 13b, 13c, and 13d. According to the measurement apparatuses 1A, 1B, and 1C and the measurement method, the reflectance at the light reflecting surface is increased, the first optical power PW1 and the second optical power PW2 are further increased, so that the crosstalk can be measured with higher accuracy. Further, since it is sufficient to connect an optical component such as the FIFO 91 to the end surface 11a of the MCF 10 without providing the light reflective film on the end surface 11a of the MCF 10, the measurement operation can be facilitated.

As described above, in each of the measurement apparatuses 1A, 1B, and 1C, the end surface 11a of the MCF 10 may be used as a light reflecting surface. This eliminates the need for a special device such as the reflection enhancing devices 80 or 90, and the configuration of the measurement apparatus can be simplified.

As in the embodiment, each of the measurement apparatuses 1A, 1B, and 1C may include the optical circulator 41, 42, 43, and 44 and the FIFO 50. Each of the optical circulator 41, 42, 43 and 44 has the first port P1, the second port P2, and the third port P3, and outputs light input to the first port P1 from the second port P2 and outputs light input to the second port P2 from the third port P3. The FIFO 50 optically couples each of the cores 13a, 13b, 13c, and 13d in the first end portion 10a of the MCF 10 to the second port P2 of a corresponding one of the optical circulators 41, 42, 43 and 44. The light source unit 20A or 20B is optically coupled to the first ports P1 of the optical circulators 41, 42, 43, and 44. The optical detection unit 30A or 30B is optically coupled to the third ports P3 of the optical circulators 41, 42, 43, and 44. This makes it possible to easily realize a configuration in which the test light from the light source unit 20A or 20B enters each of the cores 13a, 13b, 13c, and 13d, and the light emitted from the core on which the test light has entered and the light emitted from another core are detected by the optical detection unit 30A or 30B.

As in the measurement apparatus 1C shown in FIG. 5, the light source unit 20B may include the light sources 23, 24, 25 and 26, the number of which is the same as the number of the cores 13a, 13b, 13c, and 13d, and each of the light sources 23, 24, 25 and 26 may be optically coupled to the first port P1 of a corresponding one of the optical circulators 41, 42, 43, and 44. Thus, the test light can be input to the first port P1 of each of the optical circulators 41, 42, 43, and 44 with a simple configuration.

As in the measurement apparatus 1A shown in FIG. 1, the light source unit 20A may include the single light source 21 and the first optical switch 22 that selectively optically couples the single light source 21 to the first port P1 of one of the optical circulators 41, 42, 43 or 44. This makes it possible to reduce the number of light sources.

As in the measurement apparatus 1B shown in FIG. 4, the optical detection unit 30B may include the light receivers 33, 34, 35, and 36, the number of which is the same as the cores 13a, 13b, 13c, and 13d, and each of the light receivers 33, 34, 35, 36 may be optically coupled to the third port P3 of a corresponding one of the optical circulators 41, 42, 43, and 44. Thus, the light output from the third port P3 of each of the optical circulators 41, 42, 43, and 44 can be detected with a simple configuration.

As in the measurement apparatus 1A shown in FIG. 1, the optical detection unit 30A may include the single light receiver 31 and the second optical switch 32 that selectively optically couples the single light receiver 31 to the third port P3 of one of the optical circulators 41, 42, 43 or 44. This makes it possible to reduce the number of light receivers.

The inter-core crosstalk of the FIFO 50 may be 0.259 times or less, 0.122 times or less, 0.047 times or less, or 0.023 times or less the inter-core crosstalk of the MCF 10. Thus, the inter-core crosstalk measurement errors of the MCF 10 caused by the inter-core crosstalk of the FIFO 50 can be respectively set to 1 dB or less, 0.5 dB or less, 0.2 dB or less, or 0.1 dB or less, and the inter-core crosstalk of the MCF 10 can be measured with higher accuracy.

Here, crosstalk measurement errors in the measurement apparatuses 1A, 1B, and 1C and the measurement method of the embodiment will be described. In addition to the light reflected on the light reflecting surface, backward Rayleigh scattering light enters the optical detection unit 30A (30B). When the first optical power PW1 and the second optical power PW2 become too small due to reasons such as the reflectance at the light reflecting surface being low or the MCF 10 being too long and the transmission loss being large, the difference between the backward Rayleigh scattering light and each of the first optical power PW1 and the second optical power PW2 becomes small, and the measurement accuracy of the inter-core crosstalk decreases.

The present inventor has found that, when the light reflecting surface is the end surface 11a of the MCF 10 (see FIGS. 6 and 7), in measurement with continuous light or chopped light, a value $\Delta XT_{dB}$ [dB] expressed in decibels, representing a measurement error of inter-core crosstalk caused by backward Rayleigh scattering, is represented by the following Expression (2).

[Math. 10]

$$2\frac{\left(\dfrac{n-1}{n+1}\right)^2 \exp\left[-\left(\dfrac{2\pi nw\phi}{\lambda}\right)^2\right]+\dfrac{3\lambda^3}{8\pi n^2 A_{\text{eff}}}\dfrac{\alpha_R}{\alpha}\left[\dfrac{\exp\left(2\alpha L\right)-1}{2}\right]}{2\left(\dfrac{n-1}{n+1}\right)^2 \exp\left[-\left(\dfrac{2\pi nw\phi}{\lambda}\right)^2\right]+\dfrac{3\lambda^3}{8\pi n^2 A_{\text{eff}}}\dfrac{\alpha_R}{\alpha}\left[\dfrac{\exp\left(2\alpha L\right)-1}{2\alpha L}-1\right]} \quad \cdot \cdot \cdot \quad (2)$$

Here, $\lambda$ is the wavelength ($\mu$m) of the test light, $\pi$ is the ratio of a circumference of a circle to a diameter of the circle, n is the refractive index of the cores 13a, 13b, 13c, and 13d of the MCF 10, $\alpha_R$ is the Rayleigh scattering loss coefficient (km$^{-1}$) of the cores 13a, 13b, 13c, and 13d, $\alpha$ is the transmission loss coefficient (km$^{-1}$) of the cores 13a, 13b, 13c, and 13d, w is 0.5 times the mode field diameter ($\mu$m) of the cores 13a, 13b, 13c, and 13d, $\varphi$ is the angle (rad) formed between the imaginary plane H2 (or H2a) tangent to the centers of the cores 13a, 13b, 13c, and 13d on the end surface 11a and the imaginary plane H1 orthogonal to the central axis AX of the MCF 10, L is the length (km) of the MCF 10, and $A_{\text{eff}}$ is the effective cross-sectional area ($\mu$m$^2$) of the cores 13a, 13b, 13c, and 13d. Note that, when the refractive indices of two or more cores among the cores 13a, 13b, 13c, and 13d are different from each other, n is the average value of the refractive indices of the cores 13a, 13b, 13c, and 13d. Similarly, when the Rayleigh scattering loss coefficients of two or more cores among the cores 13a, 13b, 13c, and 13d are different from each other, $\alpha_R$ is the average value of the Rayleigh scattering loss coefficients of the cores 13a, 13b, 13c, and 13d. When the transmission loss coefficients of two or more cores among the cores 13a, 13b, 13c, and 13d are different from each other, $\alpha$ is the average value of the transmission loss coefficients of the cores 13a, 13b, 13c, and 13d. When the mode field diameters of two or more cores among the cores 13a, 13b, 13c, and 13d are different from each other, w is 0.5 times the average value of the mode field diameters of the cores 13a, 13b, 13c, and 13d. When the angles formed between the imaginary planes H2 and the imaginary planes H1 are different from each other in two or more cores among the cores 13a, 13b, 13c, and 13d, $\varphi$ is the average value of the angles of the cores 13a, 13b, 13c, and 13d. When the effective cross-sectional areas of two or more cores among the cores 13a, 13b, 13c, and 13d are different from each other, $A_{\text{eff}}$ is the average value of the effective cross-sectional areas of the cores 13a, 13b, 13c, and 13d. Here, n, $\alpha_R$, $\alpha$, and w are values at the wavelength $\lambda$.

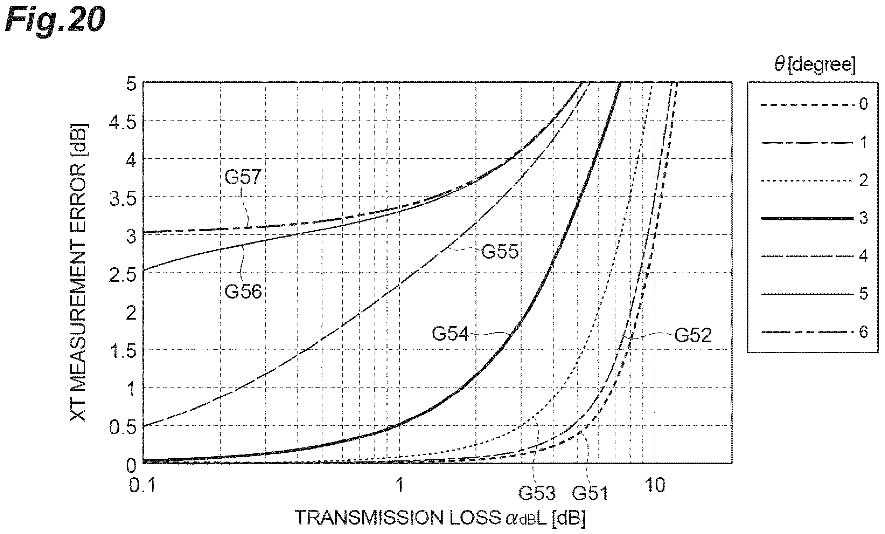

The average value of the transmission loss of the cores 13a, 13b, 13c, and 13d is represented by $\alpha_{dB}L$ (dB). The $\alpha_{dB}$ (dB·km$^{-1}$) is a value obtained by multiplying the average value $\alpha$ (km$^{-1}$) of the transmission loss coefficient by 10/ln(10) ($\approx$4.34). Further, $\varphi$ (rad) expressed by the radian method can be converted into $\theta$ (degree) ($\theta = 180\varphi/\pi$) by the degree method. The measurement errors of the inter-core crosstalk caused by the backward Rayleigh scattering are expressed as shown in FIG. 20 according to the angle $\theta$ (degree) when the wavelength $\lambda$ is 1.55 $\mu$m, the average value of $A_{\text{eff}}$ is 110 $\mu$m$^2$, the average value of w is 0.5·($A_{\text{eff}}/\pi$), and the average value of n is 1.444. FIG. 20 is a graph showing the relationship between the measurement error of inter-core crosstalk caused by backward Rayleigh scattering and the transmission loss $\alpha_{dB}L$ (dB) when the angle $\theta$ is changed from 0 to 6 in increments of 1 degree. In FIG. 20, the vertical axis represents the measurement error, and the horizontal axis represents the transmission loss $\alpha_{dB}L$ (dB). Further, curves G51 to G57 indicate the cases where the angle $\theta$ is 0 degree, 1 degree, 2 degrees, 3 degrees, 4 degrees, 5 degrees, and 6 degrees, respectively.

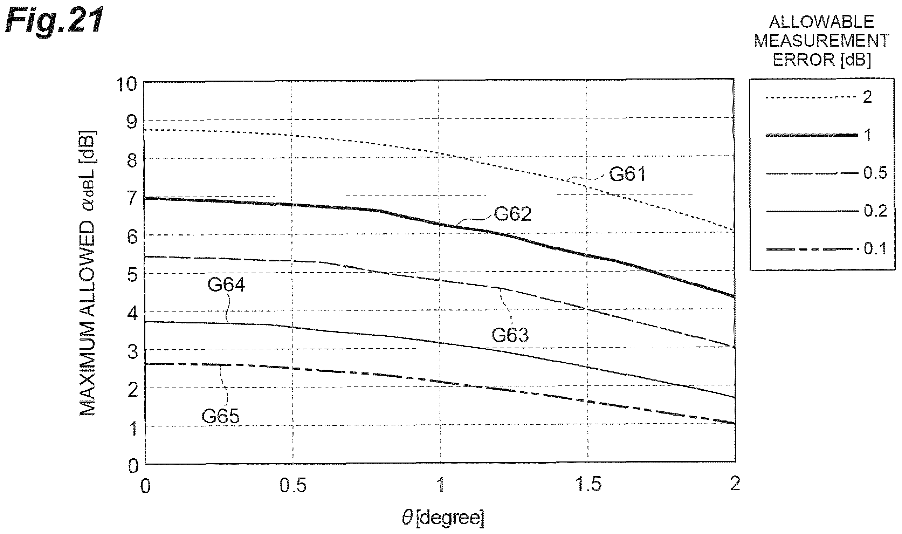

Referring to FIG. 20, it is understood that the measurement error is remarkably reduced when the angle $\theta$ is 2 degrees or less. For the case where the angle $\theta$ is 2 degrees or less, the relationship among the angle $\theta$, the transmission loss $\alpha_{dB}L$, and the measurement errors of the inter-core crosstalk caused by backward Rayleigh scattering is rearranged as the relationship between the angle $\theta$ (degree) and the maximum transmission loss $\alpha_{dB}L$ (dB) allowed with the allowable measurement errors of 10 dB, 5 dB, 2 dB, 1 dB, 0.5 dB, 0.2 dB, and 0.1 dB at the maximum, and FIG. 21 is obtained. FIG. 21 is a graph showing the relationship between the maximum allowable transmission loss $\alpha_{dB}L$ (dB) and the angle $\theta$ (degree) when the allowable measurement errors are 2 dB, 1 dB, 0.5 dB, 0.2 dB, or 0.1 dB. In FIG. 21, the vertical axis represents the maximum allowable transmission loss $\alpha_{dB}L$ (dB), and the horizontal axis represents the angle $\theta$ (degree). Further, curves G61 to G65 show the cases where the allowable measurement errors are 2 dB, 1 dB, 0.5 dB, 0.2 dB, and 0.1 dB, respectively. In FIG. 21, the transmission loss $\alpha_{dB}L$ needs to be within a range below the corresponding curve depending on the allowable measurement error. When the value of Expression (2) is $10^{0.2}$ or less, crosstalk measurement errors caused by backward Rayleigh scattered light can be reduced to 2 dB or less.

When PW1 measured in a form including a large amount of noise caused by backward Rayleigh scattering light is denoted by PW10 and PW2 measured in a form including a large amount of noise caused by backward Rayleigh scattering light is denoted by PW20, the magnitude XT of crosstalk between the core 13a and the cores 13b, 13c, or 13d can be calculated by the following Formula (3). At this time, crosstalk measurement errors caused by backward Rayleigh scattering light can be reduced, and crosstalk can be measured with higher accuracy.

[Math. 11]

$$XT = \left(\frac{PW20}{PW10}\right) \frac{\left(\frac{n-1}{n+1}\right)^2 \exp\left[-\left(\frac{2\pi n w \phi}{\lambda}\right)^2\right] + \frac{3\lambda^3}{8\pi n^2 A_{eff}} \frac{\alpha_R}{\alpha}\left[\frac{\exp(2\alpha L)-1}{2}\right]}{2\left(\frac{n-1}{n+1}\right)^2 \exp\left[-\left(\frac{2\pi n w \phi}{\lambda}\right)^2\right] + \frac{3\lambda^3}{8\pi n^2 A_{eff}} \frac{\alpha_R}{\alpha}\left[\frac{\exp(2\alpha L)-1}{2\alpha L}-1\right]} \quad \cdot \cdot \cdot \quad (3)$$

When a light reflecting surface is formed or provided with $\varphi$ = to 0 (rad) as a target, the magnitude XT of crosstalk between the core 13a and the cores 13b, 13c, or 13d is calculated by the following Formula (4) based on the PW10 and the PW20.

[Math. 12]

$$XT = \left(\frac{PW20}{PW10}\right) \frac{\left(\frac{n-1}{n+1}\right)^2 + \frac{3\lambda^3}{8\pi n^2 A_{eff}} \frac{\alpha_R}{\alpha}\left[\frac{\exp(2\alpha L)-1}{2}\right]}{2\left(\frac{n-1}{n+1}\right)^2 + \frac{3\lambda^3}{8\pi n^2 A_{eff}} \frac{\alpha_R}{\alpha}\left[\frac{\exp(2\alpha L)-1}{2\alpha L}-1\right]} \quad \cdot \cdot \cdot \quad (4)$$

Here, when the wavelength $\lambda$ and the effective cross-sectional area $A_{eff}$ were changed, it was found that the longer the wavelength $\lambda$ and the smaller the effective cross-sectional area $A_{eff}$, the narrower the range of numerical values allowed between the angle $\theta$ and the transmission loss $\alpha_{dB}L$. The effective cross-sectional area $A_{eff}$ is expressed as $A_{eff} = k\pi w^2$. The symbol k is a constant and satisfies $0.95 \leq k \leq 1.1$. According to the research of the present inventor, the smaller the constant k is, the narrower the range of numerical values allowed between the angle $\theta$ and the transmission loss $\alpha_{dB}L$ is.

According to the result of study on the case where the wavelength $\lambda$ is 1.625 $\mu$m, the effective cross-sectional area $A_{eff}$ is 60 $\mu m^2$, and the constant k is 0.95, when the wavelength $\lambda$ is 1.625 $\mu$m or less and the effective cross-sectional area $A_{eff}$ is 60 $\mu m^2$ or more, the angle $\theta$ and the transmission loss $\alpha_{dB}L$ preferably satisfy the following Expression (5) or Formula (6) each representing the range below a curve G41 in FIG. 20. This makes it possible to reduce the measurement errors of inter-core crosstalk caused by backward Rayleigh scattered light to 10 dB or less, and to measure inter-core crosstalk with higher accuracy.

[Math. 13]

$$\alpha_{\mathrm{dB}}L \leq 1.58 \times 10 + 3.23 \times 10^{-2}\theta - 4.95 \times 10^{-1}\theta^2 \qquad \cdots \quad (5)$$

[Math. 14]

$$\alpha_{\mathrm{dB}}L \leq a_0 + a_1\theta + a_2\theta^2 \ldots (6)$$

$$a_0 = -3.40 \times 10^{-1}\,[\mathrm{dB}], \; a_1 = -3.73 \times 10^{-2}\,[\mathrm{dB/degree}], \; a_2 = 7.46 \times 10^0\,[\mathrm{dB/degree}^2]$$

When the wavelength λ is 1.625 μm or less and the effective cross-sectional area $A_{\mathrm{eff}}$ is 60 μm² or more, the angle θ and the transmission loss $\alpha_{\mathrm{dB}}L$ may satisfy the following Expression (7) representing a range below a curve G42, may satisfy the following Expression (8) representing a range below a curve G43, may satisfy the following Expression (9) representing a range below a curve G44, may satisfy the following Expression (10) representing a range below a curve G45, may satisfy the following Expression (11) representing a range below a curve G46, or may satisfy the following Expression (12) representing a range below a curve G47. This makes it possible to reduce measurement errors of inter-core crosstalk caused by backward Rayleigh scattering light to 5 dB or less, 2 dB or less, 1 dB or less, 0.5 dB or less, 0.2 dB or less, or 0.1 dB or less, respectively, and to measure inter-core crosstalk with higher accuracy.

[Math. 15]

$$\alpha_{\mathrm{dB}}L \leq 1.22 \times 10 + 6.70 \times 10^{-3}\theta - 4.99 \times 10^{-1}\theta^2 \qquad \cdots \quad (7)$$

[Math 16]

$$\alpha_{\mathrm{dB}}L \leq 8.81 - 1.12 \times 10^{-2}\theta - 4.91 \times 10^{-1}\theta^2 \qquad \cdots \quad (8)$$

[Math 17]

$$\alpha_{\mathrm{dB}}L \leq 6.70 - 2.73 \times 10^{-2}\theta - 4.60 \times 10^{-1}\theta^2 \qquad \cdots \quad (9)$$

[Math 18]

$$\alpha_{\mathrm{dB}}L \leq 4.84 - 6.47 \times 10^{-2}\theta - 3.89 \times 10^{-1}\theta^2 \qquad \cdots \quad (10)$$

[Math 19]

$$\alpha_{\mathrm{dB}}L \leq 2.83 - 9.90 \times 10^{-2}\theta - 2.56 \times 10^{-1}\theta^2 \qquad \cdots \quad (11)$$

[Math. 20]

$$\alpha_{\mathrm{dB}}L \leq 1.72 - 9.04 \times 10^{-2}\theta - 1.61 \times 10^{-1}\theta^2 \qquad \cdots \quad (12)$$

The measurement error of the inter-core crosstalk due to backward Rayleigh scattering causes the measured value of the inter-core crosstalk to be larger than the true value of the inter-core crosstalk. Thus, when the measured value of the inter-core crosstalk is less than the upper limit of the specification of the inter-core crosstalk, it is ensured that the true value of the inter-core crosstalk is less than the upper limit of the specification of the inter-core crosstalk. However, as described above, the measurement error of the inter-core crosstalk caused by the backward Rayleigh scattering varies depending on the reflectance at the light reflecting surface of the second end portion 10b. In addition, in practice, the reflectance at the light reflecting surface depends on the state of the light reflecting surface in each measurement. Thus, the measurement errors of inter-core crosstalk caused by backward Rayleigh scattering vary within a certain range (for example, within the range of 10 dB or less, 5 dB or less, 2 dB or less, 1 dB or less, 0.5 dB or less, 0.2 dB or less, or 0.1 dB or less) managed in advance in each measurement. Thus, the measurement is preferably performed within the range of angle θ and transmission loss $\alpha_{\mathrm{dB}}L$ in which the upper limit of the measurement error of inter-core crosstalk caused by backward Rayleigh scattering can be suppressed to be low.

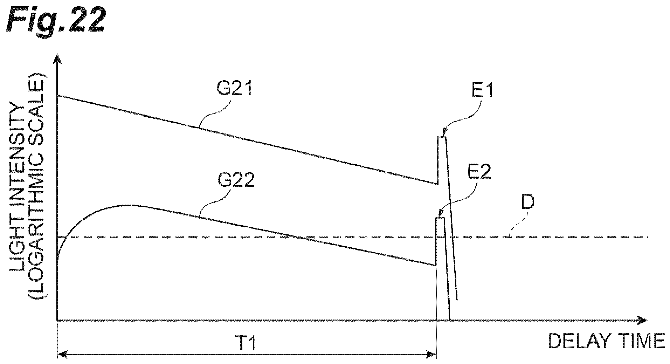

Next, the case where the test light is a pulsed light as shown in FIG. 15 will be described. FIG. 22 is a graph schematically showing time waveforms of the power (curve G21) of light emitted from the first core (here, the core 13a) into which the test light has entered and the power (curve G22) of light emitted from the second core (here, each of the cores 13b, 13c, or 13d) when the test light is pulsed light. In FIG. 22, the vertical axis represents light power (logarithmic scale), and the horizontal axis represents delay time after the test light enters. The delay time is proportional to the distance from the first end portion 10a, and specifically, coincides with a value obtained by dividing twice the distance from the first end portion 10a by the group velocity of the pulsed light in the MCF 10.

When test light, which is pulsed light, enters the core 13a in the first end portion 10a of the MCF 10, backward Rayleigh scattering light is emitted from the cores 13a, 13b, 13c, and 13d in the first end portion 10a during a period T1 until at least part of the test light reflected on the light reflecting surface of the second end portion 10b returns to the first end portion 10a. The light power of the backward Rayleigh scattering light gradually decreases with the passage of time (in other words, as the pulsed light travels in the core 13a). After a certain time has elapsed, the power of light emitted from each of the cores 13b, 13c, and 13d becomes faint, and becomes lower than the detection limit (indicated by a dashed line D in the drawing) of the light receiver, and thus cannot be detected.

Then, at least part of the test light reflected on the light reflecting surface of the second end portion 10b returns to the first end portion 10a at a timing when the period T1 has elapsed (in other words, at a timing when a delay time corresponding to twice the distance between the first end portion 10a and the light reflecting surface has elapses after the test light enters the core 13a). At this time, as shown by the curve G21, the power of the light emitted from the core 13a instantaneously increases (waveform portion E1 in the drawing). As shown by the curve G22, the power of light emitted from each of the core 13b, 13c, and 13d also increases instantaneously (waveform portion E2 in the drawing). The peak values of these waveform portions E1 and E2 are adopted as the first optical power PW1 and the second optical power PW2, respectively, in the calculation of the inter-core crosstalk.

In this way, the first optical power PW1 and the second optical power PW2 may be a power of light emitted from the first core and a power of light emitted from the second core, respectively, at a timing when a delay time corresponding to twice the distance between the first end portion 10a and the light reflecting surface elapses after the test light enters the first core. This makes it possible to eliminate the influence of backward Rayleigh scattering light from the first optical power PW1 and the second optical power PW2, and to measure inter-core crosstalk with higher accuracy.

In the above measurement method using pulsed light as the test light, when the light reflecting surface is the end surface 11a of the MCF 10, the ratio of the power (i.e., the first optical power PW1 and the second optical power PW2) A1 of the pulsed light reflected on the light reflecting surface to the power A2 of the pulsed light of backward Rayleigh scattering light which is not including reflected and is light generated immediately before the reflection (gain of signal light due to reflection G = A1/A2) is calculated by the following Formula (13). Here, T is the pulse width (km) of the test light propagating through the core in the MCF 10.

[Math. 21]

$$G = \frac{\left(\dfrac{n-1}{n+1}\right)^2 \exp\left[-\left(\dfrac{2\pi n w \phi}{\lambda}\right)^2\right]}{\dfrac{3\lambda^2}{8\pi n^2 A_{\mathrm{eff}}} \alpha_R T} \qquad \cdot\ \cdot\ \cdot\ (13)$$

When the value G is 10 or more, the gain G of the signal light due to the reflection is 10 dB or more, and the inter-core crosstalk can be measured with higher accuracy. Further, when the value G is $10^2$ or more, $10^3$ or more, or $10^4$ or more, the gain G of the signal light due to the reflection is 20 dB or more, 30 dB or more, or 40 dB or more, and the inter-core crosstalk can be measured with higher accuracy.

[First Modification]

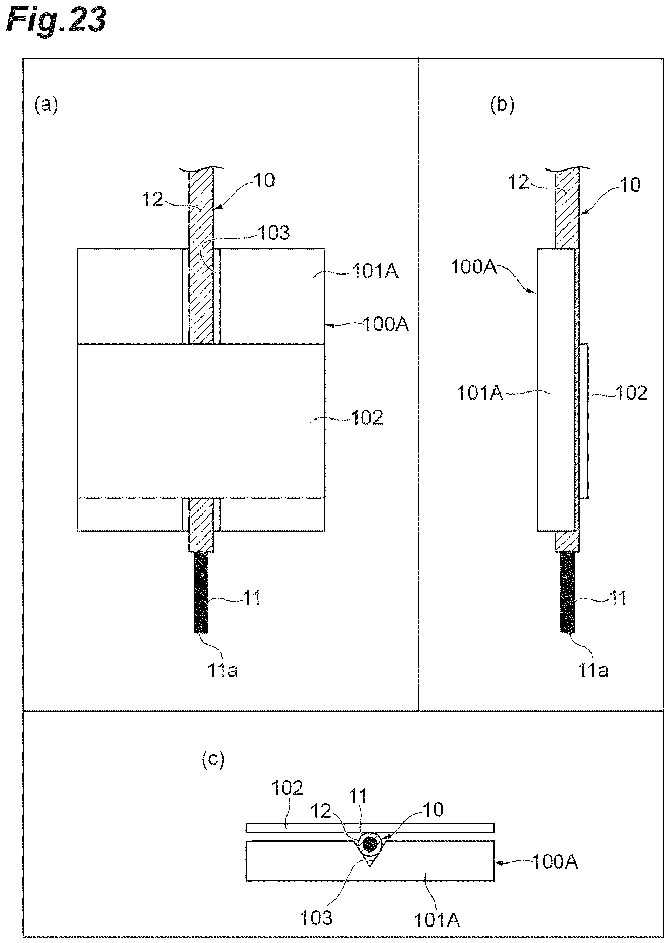

A first modification of the above embodiment will be described. FIG. 23 is a diagram showing an appearance of a holding unit 100A included in the measurement apparatus according to the first modification. Part (a) of FIG. 23 is a plan view of the holding unit 100A. Part (b) of FIG. 23 is a side view of the holding unit 100A. Part (c) of FIG. 23 is a front view of the holding unit 100A. The holding unit 100A holds the MCF 10 such that the end surface 11a of the MCF 10 is in contact only with gas (for example, air) or vacuum. In other words, the holding unit 100A holds the MCF 10 such that the end surface 11a of the MCF 10 does not touch anything other than gas or vacuum. The coating resin 12 is removed from the distal end portion of the MCF 10 including the end surface 11a, and the glass fiber 11 is exposed. The reflective film or the reflection enhancing device is not provided on the end surface 11a.

The holding unit 100A includes a platform 101A and a lid portion 102. The platform 101A is a plate-like member and may be made of, for example, metal or resin. On the main surface of the platform 101A, a V groove 103 extending along one direction is formed. The MCF 10 is accommodated in the V groove 103 at the portion having the coating resin 12. Then, the lid portion 102 arranged to face the main surface of the platform 101A is put on the MCF 10. Thus, the MCF 10 is held in a region defined by the V groove 103 and the lid portion 102 in a state where the end surface 11a is floating in the air.

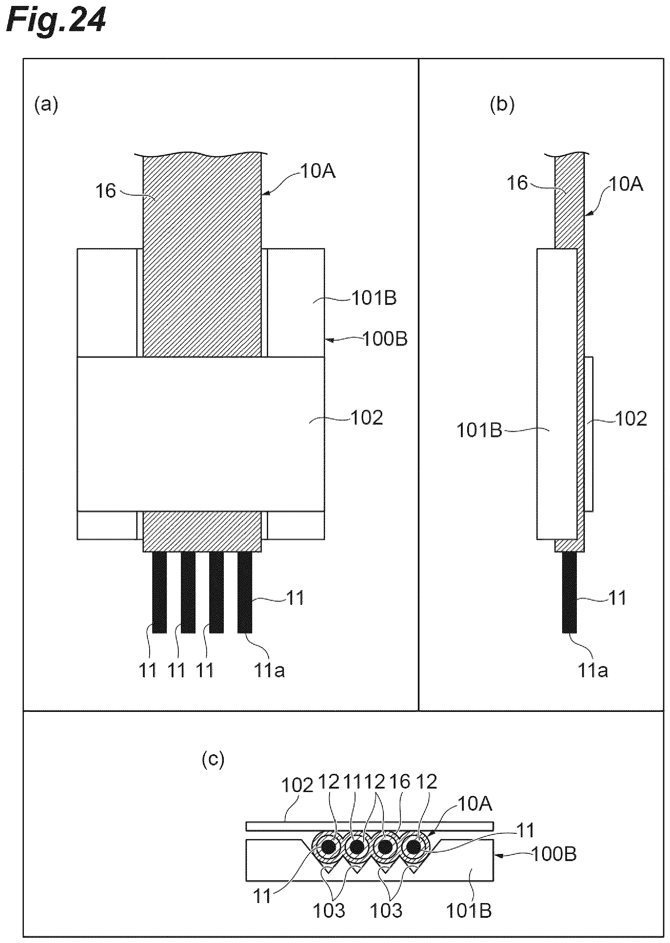

FIG. 24 is a diagram showing an appearance of a holding unit 100B capable of holding a tape core wire 10A including the plurality of MCFs 10. Part (a) of FIG. 24 is a plan view of the holding unit 100B. Part (b) of FIG. 24 is a side view of the holding unit 100B. Part (c) of FIG. 24 is a front view of the holding unit 100B. The tape core wire 10A has a coating resin 16. The coating resin 16 covers the plurality of MCFs 10 in a state where the plurality of MCFs 10 are arranged in a row, and fixes the plurality of MCFs 10 to each other. The holding unit 100B holds the tape core wire 10A such that the end surfaces 11a of the plurality of MCFs 10 is in contact only with gas (for example, air) or vacuum. In other words, the holding unit 100B holds the plurality of MCFs 10 simultaneously such that the end surfaces 11a of the plurality of MCFs 10 do not touch anything other than gas or vacuum.

The holding unit 100B includes a platform 101B and the lid portion 102. The platform 101B is a plate-like member, and may be made of, for example, metal or resin, similarly to the platform 101A. A plurality of V grooves 103 extending in one direction are formed on the main surface of the platform 101B. Each of the plurality of MCFs 10 of the tape core wire 10A is accommodated in the V groove 103 at a portion having the coating resins 12 and 16. Then, the lid portion 102 arranged to face the main surface of the platform 101B is put on the tape core wire 10A. Thus, the plurality of MCFs 10 are held in the region defined by the plurality of V grooves 103 and the lid portion 102 in a state where the end surfaces 11a are floated in the air.

As in this modification, the measurement apparatuses 1A, 1B, and 1C may further include the holding unit 100A (or the holding unit 100B in a case where the plurality of MCFs 10 constitute the tape core wire 10A) that holds the MCF 10 such that the end surface 11a contact only with gas or vacuum. Similarly, the step ST1 of the measurement method shown in FIG. 16 may include a step of arranging the end surface 11a such that the end surface 11a is in contact only with gas or vacuum, instead of step ST11. Thus, the reflectance at the light reflecting surface is increased, the first optical power PW1 and the second optical power PW2 are further increased, so that the crosstalk can be measured with higher accuracy.

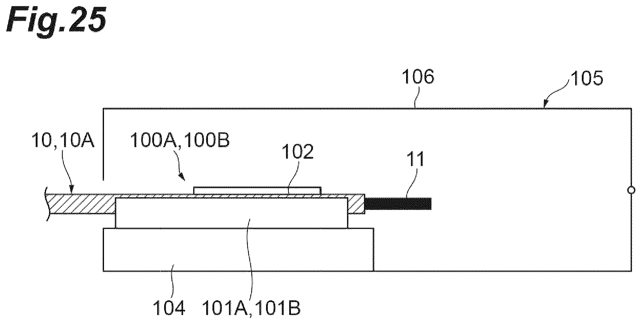

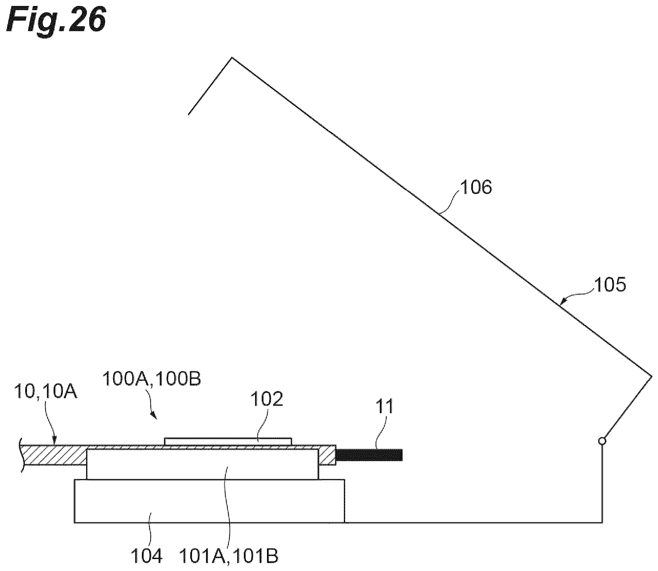

FIG. 25 is a diagram schematically showing a cross-section of a dustproof cover 105 for accommodating the holding unit 100A (or 100B). The dustproof cover 105 includes a mount 104 and a lid portion 106 configured to be openable and closable. The holding unit 100A (or 100B) is accommodated in the dustproof cover 105 and mounted on the mount 104, and is supported at a higher position by the mount 104. FIG. 26 is a diagram showing a state in which the lid portion 106 is opened. The MCF 10 is installed in the holding unit 100A (or 100B) in a state in which the lid portion 106 is opened. After installation of the MCF 10, the lid portion 106 is closed.

As described above, by covering the end surface 11a of the MCF 10 held by the holding unit 100A (or 100B) with the dustproof cover 105, the possibility that dust in the gas adheres to the end surface 11a can be reduced, and the light reflectivity at the end surface 11a can be stably maintained. Further, by raising the position of the end surface 11a of the MCF 10 by the mount 104, the possibility that dust on the bottom surface of the dustproof cover 105 adheres to the end surface 11a can be reduced, and thus, the light reflectivity at the end surface 11a can be maintained more stably.

[Second Modification]

In the above embodiment, the description has been given assuming that the reflectance at the light reflecting surface are equal among the cores 13a, 13b, 13c, and 13d of the MCF 10. The reflectance at the light reflecting surface may be different among the cores 13a, 13b, 13c, and 13d. Such a difference in reflectance is typically caused by the difference in the angle $\varphi$ among the cores 13a, 13b, 13c, and 13d. For example, when the reflectance at the light reflecting surface is different between the core 13a and the core 13b, the test light is caused to enter the core 13a (that is, the core 13a is set as the first core) to measure the inter-core crosstalk, and then test light is caused to enter the core 13b (that is, the core 13b is set as the first core) to measure the inter-core crosstalk. Then, the geometric mean of the two measured inter-core crosstalk values (linear values) is taken as the final measured value of inter-core crosstalk. This makes it possible to reduce measurement errors due to differences in reflectance.

In this case, when the absolute value of the decibel value of the ratio of the reflectance between the cores 13a, 13b, 13c, and 13d is 15.8 dB or less, 9.0 dB or less, 6.1 dB or less, 4.2 dB or less, 2.7 dB or less, or 1.9 dB or less, the measurement error caused by the different reflectance can be reduced to 5 dB or less, 2 dB or less, 1 dB or less, 0.5 dB or less, 0.2 dB or less, or 0.1 dB or less, respectively. The absolute value of the decibel value of the ratio of the reflectance is calculated by, for example, the following Expression (14). Here, $w_1$ is 0.5 times the mode field diameter of the core on which the test light enters, $w_2$ is 0.5 times the mode field diameter of the core different from the core on which the test light enters, $\varphi_1$ is the angle $\varphi$ of the core on which the test light enters, and $\varphi_2$ is the angle $\varphi$ of the core different from the core on which the test light enters.

[Math. 22]

$$\frac{10}{\ln 10}\left(\frac{\pi n}{\lambda}\right)^2 \left|\left(2w_1\phi_1\right)^2 - \left(2w_2\phi_2\right)^2\right| \qquad \cdot \cdot \cdot \quad (14)$$

The inter-spatial-channel crosstalk measurement method, the inter-core crosstalk measurement method for a multi-core optical fiber, the inter-spatial-channel crosstalk measurement apparatus, and the inter-core crosstalk measurement apparatus for a multi-core optical fiber according to the present disclosure are not limited to the above-described embodiments and modifications, and various modifications may be made. For example, the modifications described above may be combined with each other according to the required purpose and effect. The form of the light reflecting surface in the second end portion 10b of the MCF 10 is not limited to the embodiment described above. The number of cores of the MCF 10 is not limited to the embodiment described above.

REFERENCE SIGNS LIST

1A, 1B, 1C measurement apparatus
10 multi-core optical fiber (MCF)
10a first end portion
10A tape core wire
10b second end portion
11 glass fiber
11a end surface
12 coating resin
13a, 13b, 13c, 13d core
14 cladding
15 marker
16 coating resin
20A, 20B light source unit
21, 23, 24, 25, 26 light source
22 first optical switch
22a input port
22b, 22c, 22d, 22e output port
30A, 30B optical detection unit
31, 33, 34, 35, 36 light receiver
32 second optical switch
32a output port
32b, 32c, 32d, 32e input port
40 circulator unit
41, 42, 43, 44 optical circulator
50 fan-in/fan-out (FIFO)
50a, 50b, 50c, 50d, 50e input/output port
60 calculation unit
71 reflective film
72 reflective member
73 container
74 liquid metal
80 reflection enhancing device
81 MCF
82 reflective film
90 reflection enhancing device
91 FIFO
92 single-core optical fiber (SCF)
93 reflective film
100A, 100B holding unit
101A, 101B platform

102 lid portion
103 V groove
104 mount
105 dustproof cover
106 lid portion
131 end surface
200 measurement apparatus
201 light source
202 first optical switch
203, 204 FIFO
205 second optical switch
206 light receiver
AX central axis
E1, E2 waveform portion
G21, G22, G51 to G57, G61 to G65 curve
H1, H2, H2a imaginary plane
L1, L2 light
P1 first port
P2 second port
P3 third port
PW1 first optical power
PW2 second optical power
ST1, ST2, ST3, ST4, ST5, ST11, ST12, ST13 step
T1 period
φ angle

## Claims

1. An inter-spatial-channel crosstalk measurement method for measuring crosstalk between spatial channels of a space division multiplexing optical system having a first entrance/exit portion and a second entrance/exit portion opposite to the first entrance/exit portion and having a first spatial channel and a second spatial channel, the inter-spatial-channel crosstalk measurement method comprising:

   a first step of forming or providing a light reflecting surface in the second entrance/exit portion;
   a second step of causing test light to enter the first spatial channel in the first entrance/exit portion;
   a third step of reflecting at least part of the test light on the light reflecting surface;
   a fourth step of detecting a first optical power and a second optical power, the first optical power being a power of light of the at least part of the test light and being a power of light emitted from the first spatial channel in the first entrance/exit portion, the second optical power being a power of light of the at least part of the test light and being a power of light emitted from the second spatial channel in the first entrance/exit portion; and
   a fifth step of calculating a magnitude of crosstalk between the first spatial channel and the second spatial channel, based on the first optical power and the second optical power.

2. The inter-spatial-channel crosstalk measurement method according to claim 1, wherein

   the first optical power is a total sum of optical power components emitted from the first spatial channel among return optical power components of the test light including backscattered light at each position in a longitudinal direction of the space division multiplexing optical system, and
   the second optical power is a total sum of optical power components emitted from the second spatial channel among the return optical power components of the test light including backscattered light at each position in the longitudinal direction of the space division multiplexing optical system.

3. The inter-spatial-channel crosstalk measurement method according to claim 2, wherein

   the space division multiplexing optical system is a space division multiplexing optical fiber,
   the light reflecting surface is an end surface of the space division multiplexing optical fiber,
   when a wavelength of the test light is denoted by $\lambda$ ($\mu$m), a ratio of a circumference of a circle to a diameter of the circle is denoted by $\pi$, a refractive index of the first spatial channel and the second spatial channel of the space division multiplexing optical fiber is denoted by n, a transmission loss coefficient of the first spatial channel and the second spatial channel is denoted by $\alpha$ (km$^{-1}$), 0.5 times a mode field diameter of the first spatial channel and the second spatial channel is denoted by w ($\mu$m), an angle formed between each of planes tangent to centers of the first spatial channel and the second spatial channel on the end surface and a plane orthogonal to a central axis of the space division multiplexing optical fiber is denoted by $\varphi$ (rad), a length of the space division multiplexing optical fiber is denoted by L (km), an effective cross-sectional area of the first spatial channel and the second spatial channel is denoted by A$_{\text{eff}}$ ($\mu$m$^2$), and a Rayleigh scattering loss coefficient of the first spatial channel and the second spatial channel is denoted by $\alpha_{\text{R}}$ (km$^{-1}$), a value of Expression (A) is $10^{0.2}$ or less, and

when the first optical power is denoted by PW1, the second optical power is denoted by PW2, and the magnitude of the crosstalk between the first spatial channel and the second spatial channel is denoted by XT, XT is calculated using Formula (B).

[Math. 1]

$$2\frac{\left(\frac{n-1}{n+1}\right)^2 \exp\left[-\left(\frac{2\pi n w \phi}{\lambda}\right)^2\right] + \frac{3\lambda^3}{8\pi n^2 A_{\text{eff}}}\frac{\alpha_{\text{R}}}{\alpha}\left[\frac{\exp(2\alpha L)-1}{2}\right]}{2\left(\frac{n-1}{n+1}\right)^2 \exp\left[-\left(\frac{2\pi n w \phi}{\lambda}\right)^2\right] + \frac{3\lambda^3}{8\pi n^2 A_{\text{eff}}}\frac{\alpha_{\text{R}}}{\alpha}\left[\frac{\exp(2\alpha L)-1}{2\alpha L}-1\right]} \qquad \cdots \ (\text{A})$$

[Math. 2]

$$XT = \frac{1}{2}\frac{PW2}{PW1} \qquad \cdots \ (\text{B})$$

4. The inter-spatial-channel crosstalk measurement method according to claim 2, wherein

the space division multiplexing optical system is a space division multiplexing optical fiber,
the light reflecting surface is an end surface of the space division multiplexing optical fiber,
when an angle formed between each of planes tangent to centers of the first spatial channel and the second spatial channel on the end surface and a plane orthogonal to a central axis of the space division multiplexing optical fiber is denoted by $\theta$ (degree), a loss coefficient of each of the first spatial channel and the second spatial channel is denoted by $\alpha_{\text{dB}}$ (dB·km$^{-1}$), and a length of the space division multiplexing optical fiber is denoted by L (km), the angle $\theta$ and a transmission loss $\alpha_{\text{dB}}$L satisfy Formula (C), the test light has a wavelength of 1.625 $\mu$m or less, and, at the wavelength, the first spatial channel and the second spatial channel has an effective cross-sectional area of 60 $\mu$m$^2$ or more, and
when the first optical power is denoted by PW1, the second optical power is denoted by PW2, and the magnitude of the crosstalk between the first spatial channel and the second spatial channel is denoted by XT, XT is calculated using Formula (D).

[Math. 3]

$$\alpha_{\text{dB}}L \leq a_0 + a_1\theta + a_2\theta^2 \ \dots \ (\text{C})$$

$$a_0 = -3.40 \times 10^{-1} \ [\text{dB}], \ a_1 = -3.73 \times 10^{-2} \ [\text{dB/degree}], \ a_2 = 7.46 \times 10^0 \ [\text{dB/degree}^2]$$

[Math. 4]

$$XT = \frac{1}{2}\frac{PW2}{PW1} \qquad \cdots \ (\text{D})$$

5. The inter-spatial-channel crosstalk measurement method according to claim 2, wherein

the space division multiplexing optical system is a space division multiplexing optical fiber,

the light reflecting surface is an end surface of the space division multiplexing optical fiber, and

when a wavelength of the test light is denoted by $\lambda$ ($\mu$m), a ratio of a circumference of a circle to a diameter of the circle is denoted by $\pi$, a refractive index of the first spatial channel and the second spatial channel of the space division multiplexing optical fiber is denoted by n, a transmission loss coefficient of the first spatial channel and the second spatial channel is denoted by $\alpha$ (km$^{-1}$), 0.5 times a mode field diameter of the first spatial channel and the second spatial channel is denoted by w ($\mu$m), an angle formed between each of planes tangent to centers of the first spatial channel and the second spatial channel on the end surface and a plane orthogonal to a central axis of the space division multiplexing optical fiber is denoted by $\varphi$ (rad), a length of the space division multiplexing optical fiber is denoted by L (km), an effective cross-sectional area of the first spatial channel and the second spatial channel is denoted by $A_{eff}$ ($\mu$m$^2$), a Rayleigh scattering loss coefficient of the first spatial channel and the second spatial channel is denoted by $\alpha_R$ (km$^{-1}$), the first optical power is denoted by PW10, the second optical power is denoted by PW20, and the magnitude of the crosstalk between the first spatial channel and the second spatial channel is denoted by XT, XT is calculated using Formula (E).

[Math. 5]

$$XT = \left(\frac{PW20}{PW10}\right)\frac{\left(\frac{n-1}{n+1}\right)^2 \exp\left[-\left(\frac{2\pi n w \phi}{\lambda}\right)^2\right] + \frac{3\lambda^3}{8\pi n^2 A_{\text{eff}}}\frac{\alpha_R}{\alpha}\left[\frac{\exp(2\alpha L)-1}{2}\right]}{2\left(\frac{n-1}{n+1}\right)^2 \exp\left[-\left(\frac{2\pi n w \phi}{\lambda}\right)^2\right] + \frac{3\lambda^3}{8\pi n^2 A_{\text{eff}}}\frac{\alpha_R}{\alpha}\left[\frac{\exp(2\alpha L)-1}{2\alpha L}-1\right]} \qquad \cdots (\text{E})$$

6. The inter-spatial-channel crosstalk measurement method according to claim 2, wherein

the space division multiplexing optical system is a space division multiplexing optical fiber,

the light reflecting surface is an end surface of the space division multiplexing optical fiber, and

when a wavelength of the test light is denoted by $\lambda$ ($\mu$m), a ratio of a circumference of a circle to a diameter of the circle is denoted by $\pi$, a refractive index of the first spatial channel and the second spatial channel of the space division multiplexing optical fiber is denoted by n, a transmission loss coefficient of the first spatial channel and the second spatial channel is denoted by $\alpha$ (km$^{-1}$), a length of the space division multiplexing optical fiber is denoted by L (km), an effective cross-sectional area of the first spatial channel and the second spatial channel is denoted by $A_{eff}$ ($\mu$m$^2$), a Rayleigh scattering loss coefficient of the first spatial channel and the second spatial channel is denoted by $\alpha_R$ (km$^{-1}$), the first optical power is denoted by PW10, and the second optical power is denoted by PW20, XT is calculated using Formula (F).

[Math. 6]

$$XT = \left(\frac{PW20}{PW10}\right)\frac{\left(\frac{n-1}{n+1}\right)^2 + \frac{3\lambda^3}{8\pi n^2 A_{\text{eff}}}\frac{\alpha_R}{\alpha}\left[\frac{\exp(2\alpha L)-1}{2}\right]}{2\left(\frac{n-1}{n+1}\right)^2 + \frac{3\lambda^3}{8\pi n^2 A_{\text{eff}}}\frac{\alpha_R}{\alpha}\left[\frac{\exp(2\alpha L)-1}{2\alpha L}-1\right]} \qquad \cdots (\text{F})$$

7. The inter-spatial-channel crosstalk measurement method according to claim 1, wherein

in the fourth step,

a time-intensity waveform of light of the test light entering the first spatial channel in the first entrance/exit portion, the light being emitted from the first spatial channel in the first entrance/exit portion after being reflected in the first spatial channel, in the second spatial channel, and on the light reflecting surface, is analyzed to obtain, as the first optical power, a power of light reflected at a longitudinal direction position corresponding to the light reflecting surface and emitted from the first spatial channel, and

a time-intensity waveform of light of the test light entering the first spatial channel in the first entrance/exit portion, the light being emitted from the second spatial channel in the first entrance/exit portion after being reflected in the first spatial channel, in the second spatial channel, and on the light reflecting surface, is analyzed to obtain, as the second optical power, a power of light reflected at the longitudinal direction position corresponding to the light reflecting surface and emitted from the second spatial channel.

8. The inter-spatial-channel crosstalk measurement method according to claim 1 or 7, wherein

the test light is pulsed light, and
the first optical power and the second optical power are a power of light emitted from the first spatial channel and a power of light emitted from the second spatial channel, respectively, at a timing when a delay time corresponding to twice a distance between the first entrance/exit portion and the reflecting surface elapses after the test light enters the first spatial channel in the second step.

9. The inter-spatial-channel crosstalk measurement method according to claim 7 or 8, wherein

the space division multiplexing optical system is a space division multiplexing optical fiber,
the light reflecting surface is an end surface of the space division multiplexing optical fiber, and
when a wavelength of the test light is denoted by $\lambda$ ($\mu$m), a ratio of a circumference of a circle to a diameter of the circle is denoted by $\pi$, a refractive index of the first spatial channel and the second spatial channel of the space division multiplexing optical fiber is denoted by n, 0.5 times a mode field diameter of the first spatial channel and the second spatial channel is denoted by w ($\mu$m), an angle formed between each of planes tangent to centers of the first spatial channel and the second spatial channel on the end surface and a plane orthogonal to a central axis of the space division multiplexing optical fiber is denoted by $\varphi$ (rad), an effective cross-sectional area of the first spatial channel and the second spatial channel is denoted by $A_{eff}$ ($\mu$m$^2$), a Rayleigh scattering loss coefficient of the first spatial channel and the second spatial channel is denoted by $\alpha_R$ (km$^{-1}$), and a pulse width of the test light propagating through the first spatial channel and the second spatial channel in the space division multiplexing optical fiber is denoted by T (km), a value defined by Formula (G) is 10 or more.
[Math. 7]

$$ G = \frac{\left(\dfrac{n-1}{n+1}\right)^2 \exp\left[-\left(\dfrac{2\pi n w \phi}{\lambda}\right)^2\right]}{\dfrac{3\lambda^2}{8\pi n^2 A_{eff}}\alpha_R T} \qquad \cdot \ \cdot \ \cdot \quad (\text{G}) $$

10. The inter-spatial-channel crosstalk measurement method according to any one of claims 1 to 9, wherein

the space division multiplexing optical system is a space division multiplexing optical fiber or a space division multiplexing optical device,
the light reflecting surface is an entrance/exit surface of the space division multiplexing optical fiber or the space division multiplexing optical device, and
the first step includes forming the entrance/exit surface by splitting or cleaving the entrance/exit portion of the space division multiplexing optical fiber or the space division multiplexing optical device.

11. The inter-spatial-channel crosstalk measurement method according to any one of claims 1 to 10, wherein

the light reflecting surface is an entrance/exit surface of the space division multiplexing optical system, and
the first step includes providing a reflective film on the entrance/exit surface or immersing the entrance/exit surface in a liquid metal.

12. The inter-spatial-channel crosstalk measurement method according to any one of claims 1 to 11, wherein

the light reflecting surface is an entrance/exit surface of the space division multiplexing optical system, and
the first step includes arranging the entrance/exit surface such that the entrance/exit surface comes into contact only with a gas.

13. The inter-spatial-channel crosstalk measurement method according to claim 1, wherein the first step includes connecting a second entrance/exit surface of a second space division multiplexing optical system different from the space division multiplexing optical system to an entrance/exit surface of the space division multiplexing optical system in the second entrance/exit portion, the second space division multiplexing optical system having a first entrance/exit surface on which a reflective film serving as the light reflecting surface is provided.

14. The inter-spatial-channel crosstalk measurement method according to claim 1, wherein the first step includes optically coupling a second entrance/exit surface of each of a first single-core optical fiber and a second single-core optical fiber to a corresponding one of the first spatial channel and the second spatial channel in the second entrance/exit portion, each of the first single-core optical fiber and the second single-core optical fiber having a first entrance/exit surface on which a reflective film serving as the light reflecting surface is provided.

15. The inter-spatial-channel crosstalk measurement method according to any one of claims 3 to 6, 9, and 10, wherein the space division multiplexing optical fiber is a multi-core optical fiber or a multi-mode optical fiber.

16. The inter-spatial-channel crosstalk measurement method according to claim 1 or 2, wherein the space division multiplexing optical system is a multi-core optical device, a multi-core optical system, a multi-mode optical device, or a multi-mode optical system.

17. The inter-spatial-channel crosstalk measurement method according to any one of claims 1 to 16, wherein the first spatial channel and the second spatial channel are a first core and a second core, respectively, or are a first mode and a second mode, respectively.

18. An inter-core crosstalk measurement method for a multi-core optical fiber, for measuring crosstalk between cores of the multi-core optical fiber, the multi-core optical fiber having a first end portion and a second end portion opposite to the first end portion and having a first core and a second core, the inter-core crosstalk measurement method comprising:

a first step of forming or providing a light reflecting surface in the second end portion;
a second step of causing test light to enter the first core in the first end portion;
a third step of reflecting at least part of the test light on the light reflecting surface;
a fourth step of detecting a first optical power and a second optical power, the first optical power being a power of light of the at least part of the test light and being a power of light emitted from the first core in the first end portion, the second optical power being a power of light of the at least part of the test light and being a power of light emitted from the second core in the first end portion; and
a fifth step of calculating a magnitude of crosstalk between the first core and the second core, based on the first optical power and the second optical power.

19. The inter-core crosstalk measurement method for a multi-core optical fiber according to claim 18, wherein

the light reflecting surface is an end surface of the multi-core optical fiber, and
the first step includes forming the end surface by cleaving the multi-core optical fiber.

20. The inter-core crosstalk measurement method for a multi-core optical fiber according to claim 18 or 19, wherein

the light reflecting surface is an end surface of the multi-core optical fiber, and
the first step includes providing a reflective film on the end surface or immersing the end surface in a liquid metal.

21. The inter-core crosstalk measurement method for a multi-core optical fiber according to claim 18 or 19, wherein

the light reflecting surface is an end surface of the multi-core optical fiber, and
the first step includes arranging the end surface such that the end surface comes into contact only with a gas.

22. The inter-core crosstalk measurement method for a multi-core optical fiber according to any one of claims 18 to 21, wherein

the test light is pulsed light, and
the first optical power and the second optical power are a power of light emitted from the first core and a power of light emitted from the second core, respectively, at a timing when a delay time corresponding to twice a distance between the first end portion and the reflecting surface elapses after the test light enters the first core in the second step.

23. The inter-core crosstalk measurement method for a multi-core optical fiber according to claim 22, wherein

the light reflecting surface is an end surface of the multi-core optical fiber, and
when a wavelength of the test light is denoted by $\lambda$ ($\mu$m), a ratio of a circumference of a circle to a diameter of the circle is denoted by $\pi$, a refractive index of the cores of the multi-core optical fiber is denoted by n, 0.5 times a mode field diameter of the first core and the second core is denoted by w ($\mu$m), an angle formed between each of planes tangent to centers of the first core and the second core on the end surface and a plane orthogonal to a central axis of the multi-core optical fiber is denoted by $\varphi$ (rad), an effective cross-sectional area of the first core and the second core is denoted by $A_{eff}$ ($\mu$m$^2$), a Rayleigh scattering loss coefficient of the first core and the second core is denoted by $\alpha_R$ (km$^{-1}$), and a pulse width of the test light propagating through the cores in the multi-core optical fiber is denoted by T (km), a value defined by Formula (H) is 10 or more.
[Math. 8]

$$G = \frac{\left(\dfrac{n-1}{n+1}\right)^2 \exp\left[-\left(\dfrac{2\pi n w \phi}{\lambda}\right)^2\right]}{\dfrac{3\lambda^2}{8\pi n^2 A_{eff}}\alpha_R T} \qquad \cdot \cdot \cdot \;(\mathrm{H})$$

24. The inter-core crosstalk measurement method for a multi-core optical fiber according to claim 18, wherein the first step includes connecting a second end surface of a second multi-core optical fiber different from the multi-core optical fiber to an end surface of the multi-core optical fiber in the second end portion, the second multi-core optical fiber having a first end surface on which a reflective film serving as the light reflecting surface is provided.

25. The inter-core crosstalk measurement method for a multi-core optical fiber according to claim 18, wherein the first step includes optically coupling a second end surface of each of a first single-core optical fiber and a second single-core optical fiber to a corresponding one of the first core and the second core in the second end portion, each of the first single-core optical fiber and the second single-core optical fiber having a first end surface on which a reflective film serving as the light reflecting surface is provided.

26. An inter-spatial-channel crosstalk measurement apparatus for measuring crosstalk between spatial channels of a space division multiplexing optical system having a first entrance/exit portion and a second entrance/exit portion opposite to the first entrance/exit portion and having N spatial channels (with N being an integer of 2 or more), the inter-spatial-channel crosstalk measurement apparatus comprising:

a light source unit configured to cause test light to enter each of the N spatial channels in the first entrance/exit portion;
an optical detection unit configured to detect a first optical power and a second optical power, the first optical power being a power of light of at least part of the test light and being a power of light emitted from a first spatial channel that the test light enters, the second optical power being a power of light of the at least part of the test light and being a power of light emitted from a second spatial channel different from the first spatial channel, the at least part of the test light being reflected on a light reflecting surface formed or provided in the second entrance/exit portion; and
a calculation unit configured to calculate a magnitude of crosstalk between the first spatial channel and the second spatial channel, based on the first optical power and the second optical power.

27. The inter-spatial-channel crosstalk measurement apparatus according to claim 26, further comprising:

N three-port optical couplers each having a first port, a second port, and a third port, wherein light input to the first port is output from the second port, and light input to the second port is output from the third port; and
an optical component configured to optically couple each of the N spatial channels in the first entrance/exit portion of the space division multiplexing optical system to the second port of a corresponding one of the N three-port optical couplers, wherein

the light source unit is optically coupled to the first ports of the N three-port optical couplers, and
the optical detection unit is optically coupled to the third ports of the N three-port optical couplers.

28. The inter-spatial-channel crosstalk measurement apparatus according to claim 27, wherein

the light source unit includes N light sources, and
each of the N light sources is optically coupled to the first port of a corresponding one of the N three-port optical couplers.

29. The inter-spatial-channel crosstalk measurement apparatus according to claim 27, wherein
the light source unit includes:

a single light source; and
a first optical switch configured to selectively optically couple the single light source to the first port of one of the N three-port optical couplers.

30. The inter-spatial-channel crosstalk measurement apparatus according to any one of claims 27 to 29, wherein

the optical detection unit includes N light receivers, and
each of the N light receivers is optically coupled to the third port of a corresponding one of the N three-port optical couplers.

31. The inter-spatial-channel crosstalk measurement apparatus according to any one of claims 27 to 29, wherein
the optical detection unit includes:

a single light receiver; and
a second optical switch configured to selectively optically couple the single light receiver to the third port of one of the N three-port optical couplers.

32. The inter-spatial-channel crosstalk measurement apparatus according to any one of claims 26 to 31, wherein

the first optical power is a power of light reflected at a longitudinal direction position corresponding to the light reflecting surface and emitted from the first spatial channel, the first optical power being obtained by analyzing a time-intensity waveform of light of the test light entering the first spatial channel in the first entrance/exit portion, the light being emitted from the first spatial channel in the first entrance/exit portion after being reflected in the first spatial channel, in the second spatial channel, and on the light reflecting surface, and
the second optical power is a power of light reflected at the longitudinal direction position corresponding to the light reflecting surface and emitted from the second spatial channel, the second optical power being obtained by analyzing a time-intensity waveform of light of the test light entering the first spatial channel in the first entrance/exit portion, the light being emitted from the second spatial channel in the first entrance/exit portion after being reflected in the first spatial channel, in the second spatial channel, and on the light reflecting surface.

33. The inter-spatial-channel crosstalk measurement apparatus according to any one of claims 26 to 31, wherein

the test light is pulsed light, and
the first optical power and the second optical power are a power of light emitted from the first spatial channel and a power of light emitted from the second spatial channel, respectively, at a timing when a delay time corresponding to twice a distance between the first entrance/exit portion and the reflecting surface elapses after the test light enters the first spatial channel.

34. The inter-spatial-channel crosstalk measurement apparatus according to any one of claims 26 to 33, wherein

the light reflecting surface is an entrance/exit surface of the space division multiplexing optical system, and
the inter-spatial-channel crosstalk measurement apparatus further comprises a holding unit configured to hold the space division multiplexing optical system such that the entrance/exit surface is in contact only with a gas.

35. The inter-spatial-channel crosstalk measurement apparatus according to any one of claims 26 to 33, further comprising a second space division multiplexing optical system having a first entrance/exit surface on which a reflective film serving as the light reflecting surface is provided, wherein the second space division multiplexing optical system has a second entrance/exit surface connected to an entrance/exit surface of the space division multiplexing optical system in the second entrance/exit portion.

36. The inter-spatial-channel crosstalk measurement apparatus according to any one of claims 26 to 33, further comprising N single-spatial-channel optical fibers each having a first entrance/exit surface on which a reflective film serving as the light reflecting surface is provided, wherein each of the N single-spatial-channel optical fibers has a second entrance/exit surface optically coupled to a corresponding one of the N spatial channels in the second entrance/exit portion.

37. The inter-spatial-channel crosstalk measurement apparatus according to any one of claims 26 to 36, wherein the space division multiplexing optical system is a space division multiplexing optical fiber.

38. The inter-spatial-channel crosstalk measurement apparatus according to claim 37, wherein the space division multiplexing optical fiber is a multi-core optical fiber or a multi-mode optical fiber.

39. The inter-spatial-channel crosstalk measurement apparatus according to any one of claims 26 to 36, wherein the space division multiplexing optical system is a multi-core optical device, a multi-core optical fiber, a multi-mode optical device, a multi-mode optical fiber, or an optical coupling of two or more thereof.

40. The inter-spatial-channel crosstalk measurement apparatus according to any one of claims 26 to 36, wherein the first spatial channel and the second spatial channel are a first core and a second core, respectively, or are a first mode and a second mode, respectively.

41. An inter-core crosstalk measurement apparatus for a multi-core optical fiber, for measuring crosstalk between cores of the multi-core optical fiber, the multi-core optical fiber having a first end portion and a second end portion opposite to the first end portion and having N cores (with N being an integer of 2 or more), the inter-core crosstalk measurement apparatus comprising:

a light source unit configured to cause test light to enter each of the N cores in the first end portion;
an optical detection unit configured to detect a first optical power and a second optical power, the first optical power being a power of light of at least part of the test light and being a power of light emitted from a first core that the test light enters, the second optical power being a power of light of the at least part of the test light and being a power of light emitted from a second core different from the first core, the at least part of the test light being reflected on a light reflecting surface formed or provided in the second end portion; and
a calculation unit configured to calculate a magnitude of crosstalk between the first core and the second core, based on the first optical power and the second optical power.

42. The inter-core crosstalk measurement apparatus for a multi-core optical fiber according to claim 41, further comprising:

N optical circulators each having a first port, a second port, and a third port, wherein light input to the first port is output from the second port, and light input to the second port is output from the third port; and
an optical component configured to optically couple each of the N cores in the first end portion of the multi-core optical fiber to the second port of a corresponding one of the N optical circulators, wherein
the light source unit is optically coupled to the first ports of the N optical circulators, and
the optical detection unit is optically coupled to the third ports of the N optical circulators.

43. The inter-core crosstalk measurement apparatus for a multi-core optical fiber according to claim 42, wherein

the light source unit includes N light sources, and
each of the N light sources is optically coupled to the first port of a corresponding one of the N optical circulators.

44. The inter-core crosstalk measurement apparatus for a multi-core optical fiber according to claim 42, wherein the light source unit includes:

a single light source; and
a first optical switch configured to selectively optically couple the single light source to the first port of one of the N optical circulators.

45. The inter-core crosstalk measurement apparatus for a multi-core optical fiber according to any one of claims 42 to 44, wherein

the optical detection unit includes N light receivers, and
each of the N light receivers is optically coupled to the third port of a corresponding one of the N optical circulators.

46. The inter-core crosstalk measurement apparatus for a multi-core optical fiber according to claim 43 or 44, wherein the optical detection unit includes:

a single light receiver; and
a second optical switch configured to selectively optically couple the single light receiver to the third port of one of the N optical circulators.

47. The inter-core crosstalk measurement apparatus for a multi-core optical fiber according to any one of claims 41 to 46, wherein

the test light is pulsed light, and
the first optical power and the second optical power are a power of light emitted from the first core and a power of light emitted from the second core, respectively, at a timing when a delay time corresponding to twice a distance between the first end portion and the reflecting surface elapses after the test light enters the first core.

48. The inter-core crosstalk measurement apparatus for a multi-core optical fiber according to any one of claims 41 to 47, wherein

the light reflecting surface is an end surface of the multi-core optical fiber, and
the inter-core crosstalk measurement apparatus further comprises a holding unit configured to hold the multi-core optical fiber such that the end surface is in contact only with a gas.

49. The inter-core crosstalk measurement apparatus for a multi-core optical fiber according to any one of claims 41 to 47, further comprising a second multi-core optical fiber having a first end surface on which a reflective film serving as the light reflecting surface is provided, wherein the second multi-core optical fiber has a second end surface connected to an end surface of the multi-core optical fiber in the second end portion.

50. The inter-core crosstalk measurement apparatus for a multi-core optical fiber according to any one of claims 41 to 47, further comprising N single-core optical fibers each having a first end surface on which a reflective film serving as the light reflecting surface is provided, wherein each of the N single-core optical fibers has a second end surface optically coupled to a corresponding one of the N cores in the second end portion.

# Fig.1

EP 4 667 892 A1

# Fig.2

## Fig.3

# Fig.4

EP 4 667 892 A1

# Fig.5

EP 4 667 892 A1

# *Fig.6*

10b(10)

EP 4 667 892 A1

**Fig.7**

10b(10)

39

Fig.8

# Fig.9

**Fig.10**

# Fig.11

10b(10)

## Fig.12

10b(10)

FIFO

## Fig.13

*Fig.14*

*Fig.15*

## Fig.16

```
              ┌───────────┐
              │   START   │
              └───────────┘
                    │
                    │                        ST1
      ┌─────────────────────────────────────┐
      │     FORMING OR PROVIDING LIGHT       │
      │       REFLECTING SURFACE             │  ST11
      │   ┌─────────────────────────────┐   │
      │   │  PROVIDING REFLECTIVE FILM OR │   │
      │   │    REFLECTIVE MEMBER OR       │   │
      │   │ IMMERSING IN THE LIQUID METAL │   │
      │   └─────────────────────────────┘   │
      └─────────────────────────────────────┘
                    │
      ┌─────────────────────────────────────┐
      │       INCIDENCE OF TEST LIGHT        │  ST2
      └─────────────────────────────────────┘
                    │
      ┌─────────────────────────────────────┐
      │          REFLECTING AT LEAST         │
      │         PART OF TEST LIGHT           │  ST3
      └─────────────────────────────────────┘
                    │
      ┌─────────────────────────────────────┐
      │        DETECTING REFLECTED LIGHT     │  ST4
      └─────────────────────────────────────┘
                    │
      ┌─────────────────────────────────────┐
      │        CALCULATING CROSSTALK         │  ST5
      └─────────────────────────────────────┘
                    │
              ┌───────────┐
              │    END    │
              └───────────┘
```

# Fig.17

START

ST1
FORMING OR PROVIDING LIGHT
REFLECTING SURFACE

ST12
CONNECTING OTHER END SURFACE OF
MCF PROVIDED WITH REFLECTIVE FILM
ON ONE END SURFACE

INCIDENCE OF TEST LIGHT ST2

REFLECTING AT LEAST
PART OF TEST LIGHT ST3

DETECTING REFLECTED LIGHT ST4

CALCULATING CROSSTALK ST5

END

# Fig.18

START

ST1

FORMING OR PROVIDING LIGHT
REFLECTING SURFACE

ST13

CONNECTING OTHER END SURFACES OF
PLURALITY OF MCFS PROVIDED WITH
REFLECTIVE FILMS ON ONE END SURFACES

INCIDENCE OF TEST LIGHT — ST2

REFLECTING AT LEAST
PART OF TEST LIGHT — ST3

DETECTING REFLECTED LIGHT — ST4

CALCULATING CROSSTALK — ST5

END

# Fig.19

```
        ┌─────────────┐
        │    START    │
        └─────────────┘
               │
               │                              ST1
  ┌────────────────────────────────────────────┐
  │      FORMING OR PROVIDING LIGHT             │
  │         REFLECTING SURFACE      ST14        │
  │  ┌──────────────────────────────────────┐  │
  │  │  FORMING LIGHT REFLECTING SURFACE     │  │
  │  │     BY CUTTING OR POLISHING           │  │
  │  └──────────────────────────────────────┘  │
  └────────────────────────────────────────────┘
               │
  ┌────────────────────────────────────────┐
  │       INCIDENCE OF TEST LIGHT          │── ST2
  └────────────────────────────────────────┘
               │
  ┌────────────────────────────────────────┐
  │         REFLECTING AT LEAST            │── ST3
  │         PART OF TEST LIGHT            │
  └────────────────────────────────────────┘
               │
  ┌────────────────────────────────────────┐
  │       DETECTING REFLECTED LIGHT        │── ST4
  └────────────────────────────────────────┘
               │
  ┌────────────────────────────────────────┐
  │        CALCULATING CROSSTALK           │── ST5
  └────────────────────────────────────────┘
               │
        ┌─────────────┐
        │     END     │
        └─────────────┘
```

Fig.20

Fig.21

ALLOWABLE
MEASUREMENT
ERROR [dB]

......... 2

——— 1

— — 0.5

—— 0.2

—·—· 0.1

EP 4 667 892 A1

**Fig.22**

**Fig.23**

# Fig.24

(a)

16

10A

101B

100B

102

11

11  11  11  11a

(b)

16

10A

101B

102

11

11a

(c)

102  12 11 12 16 12

10A

11

100B

11

103  103  101B

# Fig.25

**Fig.26**

# Fig.27

## INTERNATIONAL SEARCH REPORT

International application No.

**PCT/JP2024/005111**

| A. | CLASSIFICATION OF SUBJECT MATTER |
|---|---|

*G01M 11/02*(2006.01)i
FI: G01M11/02 J

According to International Patent Classification (IPC) or to both national classification and IPC

| B. | FIELDS SEARCHED |
|---|---|

Minimum documentation searched (classification system followed by classification symbols)

G01M 11/00-G01M 11/08; G02B 6/02-G02B 6/10; G02B 6/44

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | 小林優斗ら. OTDRを用いたマルチコア光ファイバのクロストーク測定. 住友電工テクニカルレビュー. January 2023, vol. 202, (KOBAYASHI, Yuto et al. Measurement of Inter-core Crosstalk of Multicore Optical Fibers with Optical Time Domain Reflectometry. Sumitomo Electric Technical Review.) fig. 2, 9 | 1-2, 7-50 |
| A | | 3-6 |
| Y | JP 2002-323408 A (FLUKE NETWORKS, INC.) 08 November 2002 (2002-11-08) paragraphs [0016], [0017], fig. 2-5 | 1-2, 7-50 |
| A | | 3-6 |
| Y | JP 2001-83040 A (HITACHI CABLE LTD.) 30 March 2001 (2001-03-30) paragraph [0016], fig. 1 | 1-2, 7-50 |
| A | | 3-6 |

☑ Further documents are listed in the continuation of Box C.　　☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **21 March 2024** | **16 April 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT

| International application No. |
| --- |
| **PCT/JP2024/005111** |

### C.    DOCUMENTS CONSIDERED TO BE RELEVANT

| Category* | Citation of document, with indication, where appropriate, of the relevant passages | Relevant to claim No. |
| --- | --- | --- |
| Y | JP 2006-67014 A (SUMITOMO ELECTRIC INDUSTRIES, LTD.) 09 March 2006 (2006-03-09)<br>paragraphs [0046], [0050] | 27-31 |
| A | | 3–6 |

Form PCT/ISA/210 (second sheet) (July 2022)

**INTERNATIONAL SEARCH REPORT**
Information on patent family members

International application No.

**PCT/JP2024/005111**

| Patent document cited in search report | | | Publication date (day/month/year) | Patent family member(s) | Publication date (day/month/year) |
|---|---|---|---|---|---|
| JP | 2002-323408 | A | 08 November 2002 | US 2002/0101577 A1 paragraphs [0022], [0023], fig. 2-5 | |
| JP | 2001-83040 | A | 30 March 2001 | (Family: none) | |
| JP | 2006-67014 | A | 09 March 2006 | (Family: none) | |

Form PCT/ISA/210 (patent family annex) (July 2022)

**EP 4 667 892 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023021827 A

- WO 2012115162 A

**Non-patent literature cited in the description**

- **TETSUYA HAYASHI et al.** Characterization of Crosstalk in Ultra-Low-Crosstalk Multi-Core Fiber. *Journal of Lightwave Technology*, 2012, vol. 30 (4)

- **MASATAKA NAKAZAWA et al.** Nondestructive measurement of mode couplings along a multi-core fiber using a synchronous multi-channel OTDR. *Optics Express*, 2012, vol. 20 (11)